(19) Europäisches Patentamt / European Patent Office / Office européen des brevets

(11) **EP 2 989 648 B1**

(12) **FASCICULE DE BREVET EUROPEEN**

(45) Date de publication et mention de la délivrance du brevet:
**17.05.2017 Bulletin 2017/20**

(21) Numéro de dépôt: **14718976.5**

(22) Date de dépôt: **22.04.2014**

(51) Int Cl.:
*H01G 11/26* (2013.01)     *H01G 11/34* (2013.01)
*H01G 11/38* (2013.01)     *H01G 11/62* (2013.01)
*H01G 11/68* (2013.01)     *H01G 11/04* (2013.01)
*H01G 11/30* (2013.01)     *H01G 11/60* (2013.01)

(86) Numéro de dépôt international:
**PCT/EP2014/058130**

(87) Numéro de publication internationale:
**WO 2014/173891 (30.10.2014 Gazette 2014/44)**

(54) **DISPOSITIF ELECTROCHIMIQUE DU TYPE SUPERCONDENSATEUR A BASE D'UN ELECTROLYTE COMPRENANT, COMME SEL CONDUCTEUR, AU MOINS UN SEL A BASE D'UN ELEMENT ALCALIN AUTRE QUE LE LITHIUM**

ELEKTROCHEMISCHE VORRICHTUNG ALS SUPERKONDENSATOREN AUF ELEKTROLYTBASIS MIT MINDESTENS EINEM ALKALISCHEN LEITSALZ AUSSER LITHIUM

ELECTROCHEMICAL DEVICE LIKE SUPERCAPACITOR WITH AN ELECTROLYTE COMPRISING, AS CONDUCTIVE SALT, AT LEAST ONE ALCALINE SALT OTHER THAN LITHIUM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.04.2013 FR 1353753**

(43) Date de publication de la demande:
**02.03.2016 Bulletin 2016/09**

(73) Titulaire: **Commissariat à l'Énergie Atomique et aux Énergies Alternatives**
**75015 Paris (FR)**

(72) Inventeurs:
• **AZAIS, Philippe**
**38120 SAINT-EGREVE (FR)**
• **LEJOSNE, Johann**
**F-42155 Lentigny (FR)**
• **PICOT, Matthieu**
**44230 SAINT SEBASTIEN SUR LOIRE (FR)**

(74) Mandataire: **Brevalex**
**95, rue d'Amsterdam**
**75378 Paris Cedex 8 (FR)**

(56) Documents cités:
WO-A1-2012/115050     FR-A1- 2 759 211
JP-A- 2008 050 258     JP-B1- 5 058 381
US-A1- 2006 209 493     US-A1- 2007 053 141
US-A1- 2009 290 287

**EP 2 989 648 B1**

**Description**

**DOMAINE TECHNIQUE**

La présente invention a trait à des dispositifs électrochimiques du type supercondensateur spécifique comprenant au moins une cellule comprenant un couple d'électrodes (électrode négative et électrode positive) spécifique associé à un électrolyte spécifique permettant d'accéder à une forte densité d'énergie.

Ces dispositifs trouvent leur application dans de nombreux domaines, nécessitant la fourniture rapide de fortes densités d'énergie, notamment dans l'alimentation des systèmes embarqués de faible épaisseur, comme les cartes de crédit, les étiquettes intelligentes, dans l'alimentation des téléphones mobiles ou encore dans l'alimentation des véhicules électriques.

**ÉTAT DE LA TECHNIQUE ANTÉRIEURE**

Les supercondensateurs (pouvant être également qualifiés de supercapacités) constituent des dispositifs à stockage d'énergie permettant d'obtenir une densité de puissance et une densité d'énergie intermédiaires entre celles obtenues pour des batteries électrochimiques et des condensateurs électrolytiques classiques et présentent pour particularité de permettre de restituer plus rapidement de l'énergie que n'est apte à le faire une batterie électrochimique.

Du point de vue du fonctionnement, les supercondensateurs fonctionnent sur le principe de la double-couche électrochimique, d'où l'appellation anglo-saxonne parfois rencontrée de «Electrochemical double layer capacitor» (connue également sous l'abréviation EDLC), soit, en d'autres termes, sur le principe de stockage d'énergie par distribution, au sein d'au moins une cellule, des ions provenant d'un électrolyte au voisinage de la surface de deux électrodes poreuses (respectivement, une électrode positive et une électrode négative) imprégnées d'un électrolyte ionique, séparées par une membrane poreuse permettant d'assurer une isolation électronique entre les électrodes, tout en permettant un passage facile des ions de l'électrolyte.

Ainsi, plus spécifiquement, une cellule de base d'un supercondensateur peut se résumer aux éléments suivants :

- une électrode positive ;
- une interface électrode positive/électrolyte formant une double couche électrochimique ;
- une membrane poreuse imprégnée par ledit électrolyte ;
- une électrode négative ; et
- une interface électrode négative/électrolyte formant une double couche électrochimique.

Du fait de l'existence de ces deux interfaces formant chacune une double couche électrochimique, un supercondensateur peut être considéré comme l'association en série de deux condensateurs, l'un à l'électrode positive et l'autre à l'électrode négative, ces deux condensateurs étant créés par application d'un courant aux bornes du supercondensateur, ce qui crée une zone de charges d'espace aux deux interfaces électrode-électrolyte, l'énergie étant ainsi stockée de façon électrostatique.

Il est connu des supercondensateurs, dont les deux électrodes (électrode positive et électrode négative) sont toutes deux à base de carbone activé et l'électrolyte à base d'ions lithium, ce type de supercondensateurs présentant une forte densité de puissance, une cyclabilité élevée mais toutefois une densité d'énergie faible liée à la fois à la capacité moyenne du supercondensateur (celle-ci étant de l'ordre de 10 Wh/kg) et à la tension de fonctionnement, les facteurs limitatifs étant les suivants :

- la tension de fonctionnement doit être relativement faible (de l'ordre de 2,7 à 2,8 V) pour conserver une durée de vie élevée et une autodécharge contrôlée, le phénomène d'autodécharge étant plus élevé que celui des batteries ;
- la capacité volumique des matériaux d'électrode ; et
- les constituants passifs (tels que les collecteurs, les séparateurs, le boîtier), qui peuvent nuire aux performances du dispositif, ce qui amène les concepteurs à réduire ce type de constituants.

En particulier, la demande FR 2 759 211 a trait à un supercondensateur idéalement polarisable constitué d'une électrode positive et de son collecteur de courant, d'une électrode négative et de son collecteur de courant, lesdites électrodes comprenant un matériau carboné de haute surface spécifique, d'un séparateur et d'un électrolyte liquide non aqueux imprégnant ledit séparateur et lesdites électrodes, ledit électrolyte liquide non aqueux étant une solution organique d'un sel de sodium ou de potassium ou un sel de métal alcalino-terreux, seuls ou en mélange.

Par exemple, les électrodes peuvent être formées d'un tissu de carbone activé de surface spécifique supérieure à 1000 m$^2$/g.

Si l'on se réfère à l'exemple concret de réalisation (en l'occurrence, l'exemple 5), il est explicité que les électrodes sont identiques (elles sont toutes deux à base de charbon actif).

La demande US 2007/0053141 a trait à un condensateur double couche apte à supprimer la génération de gaz due à la décomposition de l'électrolyte utilisée dans ledit condensateur en raison des composés acides générés à l'électrode positive.

Pour ce faire, il est proposé un condensateur double couche comprenant des électrodes polarisées à carbone activé, une solution électrolytique non aqueuse et un agent antiacide consistant en un sel de métal alcalin d'un acide organique (par exemple, R-COOM, R-OM ou R-SO$_s$M, avec M est du sodium ou du potassium et R est un groupe alkyle ayant 4 atomes de carbone ou plus).

En se référant plus particulièrement aux exemples (cf. Tableau 1 récapitulatif), il apparaît que les condensateurs décrits dans ce document comportent, pour chaque cellule, deux électrodes de même composition (toutes deux étant à base de carbone activé).

La demande US 2006/209493 traite également des condensateurs à double couche présentant des caractéristiques similaires à celles décrites dans US 2007/0053141, avec pour particularité qu'un agent antiacide est compris au sein de l'électrode positive.

En se référant également aux exemples, il ressort que les condensateurs comportent des électrodes de composition identique (à base de carbone activé).

Le document JP 2008-050258 traite de matériaux carbonés spécifiques (en l'occurrence, des matériaux carbonés comprenant une teneur de 100-2000 ppm en élément métallique, tels que des éléments alcalins, des éléments alcalino-terreux et des éléments appartenant aux terres rares) utilisables pour constituer des électrodes de condensateurs à double couche comprenant, notamment un électrolyte comprenant une solution à base de carbonate de propylène et de LiBF$_4$.

En vue de répondre à la demande d'accroissement de la densité d'énergie, il a été développé des supercondensateurs se situant entre les supercondensateurs classiquement utilisés à base de carbone activé et les batteries, ce qui a amené à qualifier ceux-ci de supercondensateurs asymétriques ou hybrides, du fait que, spécifiquement, l'une des électrodes est constituée à partir d'un matériau de batterie rechargeable (classiquement, l'électrode négative) et l'autre est constituée à base de carbone activé (classiquement, l'électrode positive), l'électrolyte situé entre ces deux électrodes étant classiquement un électrolyte aqueux.

En d'autres termes, ce type de supercondensateurs fonctionne sur le principe selon lequel le stockage de charges au niveau de l'électrode négative se produit par le biais d'une réaction redox, tandis que le stockage de charges au niveau de l'électrode positive se produit par le biais de la formation d'une double-couche électrochimique.

Des supercondensateurs hybrides de ce type sont notamment explicités dans :

- WO 95/21466 décrivant des supercondensateurs basés sur le principe des électrodes dissymétriques, une première électrode comprenant un matériau carboné, tel que du carbone vitreux, du carbone activé, siège de la formation d'une double couche électrique et une seconde électrode métallique à base de ruthénium, de rhodium, de palladium, d'osmium, d'iridium, de cobalt, de nickel, de manganèse, de fer, de platine et leurs alliages, cette seconde électrode étant le siège d'une réaction redox ;
- WO 00/02215 décrivant des supercondensateurs basés également sur le principe des électrodes dissymétriques, une première électrode comprenant un matériau carboné sous forme de carbone nanoporeux et une deuxième électrode métallique poreuse, tel qu'une électrode en nickel, en cobalt et/ou en plomb ;
- WO 2012/115050 décrivant uniquement des condensateurs hybrides comprenant :

    *une électrode positive formée avec une couche d'électrode comprenant une substance active comprenant du carbone activé ou des nanotubes de carbone, un additif conducteur de l'électricité et un liant ; et

    *une électrode négative formée avec une couche d'électrode comprenant une substance active comprenant au moins une substance choisie parmi un matériau carboné apte à incorporer et libérer un ion alcalin ou un ion alcalino-terreux, Sn, Si ou SiO$_2$ S ou sulfure, et du titane, un additif conducteur de l'électricité et un liant ;

- US 2009/290287 décrivant des supercondensateurs hybrides, dans lesquels :

    *l'électrode positive est décrite, comme pouvant comprendre, un large panel de matériaux (9 catégories de matériaux) et parmi eux, qui plus est, un nombre important de matériaux lithiés (5 catégories) (Paragraphe [0015]) ;

    *l'électrode négative est décrite comme pouvant comprendre, un large panel de matériaux (14 catégories de matériaux) (Paragraphe [0016]) ;

\*l'électrolyte est décrit comme pouvant souscrire à des caractéristiques très variées (électrolyte solide, électrolyte aqueux avec un grand nombre d'alternatives et électrolyte non aqueux) (Paragraphe [0017]) avec, dans la description spécifique, une insistance particulière pour les électrolytes comprenant des sels de lithium (Paragraphe [0057]).

De ces systèmes fonctionnant principalement en milieu aqueux découlent les inconvénients suivants :

- une tension de fonctionnement du système faible (généralement, inférieure à 2,2 V), ce qui nécessite la formation d'un module de stockage d'énergie consistant en un assemblage d'un certain nombre de cellules pour obtenir une tension de sortie suffisante pour alimenter un dispositif, avec l'inconvénient que cela génère une résistance de série supplémentaire non négligeable dans les systèmes de stockage d'énergie de puissance ;
- un coût relativement élevé, ce qui les rend quasiment uniquement abordables pour les secteurs de niche.

D'autres systèmes hybrides ont été également mis au point, dans lesquels les deux électrodes sont réalisées à base d'un matériau carboné, notamment une électrode négative à base de graphite et une électrode poreuse positive à base de carbone activé, tandis que l'électrolyte est un électrolyte lithié.
L'un des principaux problèmes à résoudre dans ce type de configuration est la réalisation d'une couche de passivation en lithium à la surface de l'électrode négative.
Différentes solutions existent pour déposer une couche de passivation en lithium à la surface de l'électrode négative ont été proposées :

- l'incorporation au système d'une feuille de lithium complémentaire, pour saturer le système en ions lithium, dont la majorité est consommée lors des premiers cycles pour former ladite couche de passivation, tel que décrit dans WO 2010024327, ce qui n'est pas toutefois sans risque d'engendrer des problèmes de sécurité et un surcoût importants ;
- le dépôt de cette couche par évaporation de lithium, ce procédé étant toutefois complexe et coûteux industriellement et génèrent également une couche faiblement oxydée, ce qui est néfaste pour son utilisation dans un système électrochimique.

En sus des inconvénients susmentionnés, les supercondensateurs hybrides fonctionnant sur la base d'un assemblage comportant une électrode négative à base de graphite et une électrode positive à base de carbone activé et un électrolyte lithié présentent les autres inconvénients suivants :

- la constante de temps est dégradée en raison de la résistance de l'électrode négative contenant une couche de passivation et de la faible conductivité des électrolytes lithiés, par exemple, par rapport à un électrolyte standard TEABF$_4$ 1M dans l'acétonitrile ;
- l'utilisation combinée du graphite et d'un électrolyte lithié implique la génération d'une couche de passivation, comme exposé ci-dessus, et donc une consommation importante d'électrolyte au moins lors du premier cycle ;
- les électrolytes lithiés sont onéreux (notamment LiPF$_6$ ou LiTFSI), les coûts se révélant d'autant plus élevés que le fait d'utiliser du carbone activé à l'électrode positive nécessite un volume d'électrolyte relativement élevé pour pouvoir en saturer la porosité ; et
- le potentiel de travail de l'électrode négative dans le type d'assemblage susmentionné impose l'utilisation d'un collecteur en cuivre relativement onéreux et interdit l'utilisation d'un collecteur en un matériau moins onéreux, tel que cela est le cas de l'aluminium.

Au regard de ce qui précède, les inventeurs se sont fixés pour objectif de mettre au point un nouveau type de supercondensateurs hybrides permettant de ne pas recourir à l'utilisation d'un électrolyte lithié, ce qui permettra de contourner les inconvénients liés notamment à la formation de la couche de passivation et également les coûts liés à l'utilisation du lithium.

## EXPOSÉ DE L'INVENTION

Ils ont ainsi découvert qu'en choisissant, de façon motivée, des matériaux d'électrode spécifiques et un électrolyte spécifique dans un dispositif du type supercondensateur, il est possible de surmonter ces inconvénients.
Ce dispositif du type supercondensateur hybride comprend au moins une cellule comprenant :

- une électrode positive poreuse comprenant du carbone activé ;
- une électrode négative comprenant un matériau carboné apte à intercaler un élément alcalin autre que le lithium, ce matériau carboné étant différent du carbone activé utilisé à l'électrode positive; et

4

- un électrolyte non aqueux comprenant un sel choisi parmi les sels d'au moins un métal alcalin autre que le lithium.

Les sels d'au moins un métal alcalin autre que le lithium peuvent être des sels de sodium, des sels de potassium, des sels de rubidium, des sels de césium et des mélanges de ceux-ci, et de manière préférée, des sels de sodium, des sels de potassium et des mélanges de ceux-ci.

Avant d'entrer plus avant dans la description, nous précisons les définitions suivantes.

Par électrode positive, on entend l'électrode qui est le siège, dans le cadre de l'invention, de la formation de la double-couche électrochimique, ce qui signifie, en d'autres termes, que cette électrode positive constitue, au sens strict, une électrode répondant au fonctionnement du supercondensateur.

Par électrode négative, on entend l'électrode qui est le siège, dans le cadre de l'invention, d'une réaction redox, laquelle se matérialise notamment par une intercalation de l'élément alcalin, entrant dans la constitution de l'électrolyte. Par exemple, lorsqu'il s'agit du sodium, l'intercalation peut se produire, de sorte à ce que la composition en sodium soit au moins supérieure ou égale à $NaC_{36}$ et, lorsqu'il s'agit du potassium, l'intercalation peut se produire, de sorte à ce que la composition en potassium soit au plus égale à $KC_8$, par exemple, allant de $KC_{64}$ à $KC_8$ et avantageusement correspondant à $KC_{16}$.

De manière plus spécifique, l'électrode positive comprend, comme mentionné ci-dessus, du carbone activé, ce carbone activé pouvant être présent en une teneur d'au moins 60% massique par rapport à la masse totale de l'électrode, étant entendu que la masse totale de l'électrode n'inclut pas la masse du collecteur de courant. De préférence, le carbone activé est présent en une teneur allant de 60% massique à 95% massique par rapport à la masse totale de l'électrode, de préférence encore, de 85% à 95% massique par rapport à la masse totale de l'électrode.

Outre la présence de carbone activé, l'électrode positive peut comprendre un ou plusieurs liants organiques, qui vont contribuer à assurer la cohésion mécanique de ladite électrode.

Ces liants organiques peuvent être, en particulier, des liants polymériques comprenant un ou plusieurs polymères choisis parmi :

*les polymères fluorés, tels qu'un polytétrafluoroéthylène (connu sous l'abréviation PTFE), un polyfluorure de vinylidène (connu sous l'abréviation PVDF), un copolymère poly(fluorure de vinylidène-co-hexafluoropropène) (connu sous l'abréviation PVDF-HFP), un copolymère fluoré éthylène-propylène (connu sous l'abréviation FEP), un copolymère issu de la copolymérisation de tétrafluoroéthylène et du perfluoroalcoxyvinyléther (connu sous l'abréviation PFA) ;
*les polyimides ;
*les polyacrylonitriles ; et
*les mélanges de ceux-ci.

Avantageusement, ce ou ces liants sont présents en une teneur choisie de sorte à être la plus faible possible, sans que cela compromette la tenue mécanique au cours du cyclage sur l'ensemble de la gamme de températures d'utilisation, généralement comprise entre -40°C et la température d'ébullition du ou des solvants organiques entrant éventuellement dans la constitution de l'électrolyte. Par exemple, le ou les liants peuvent être présents en une teneur inférieure ou égale à 15% massique par rapport à la masse totale de l'électrode, de préférence de 1 à 15% massique, de préférence, encore, de 2 à 7% massique par rapport à la masse totale de l'électrode. Il est entendu que la masse totale de l'électrode n'inclut pas la masse du collecteur de courant.

L'électrode positive peut comprendre, également, un additif carboné conducteur de l'électricité autre que du carbone activé, choisi parmi les noirs de carbone, les noirs d'acétylène, du graphite, les nanotubes de carbone, les fibres de carbone et les mélanges de ceux-ci, par exemple, les fibres de carbone obtenues en phase vapeur (connues sous l'abréviation VGCF), ledit additif carboné pouvant être présent en une teneur allant jusqu'à 15% massique par rapport à la masse totale de l'électrode positive, de préférence de 1 à 15% massique, de préférence encore de 2 à 10% massique par rapport à la masse totale de l'électrode positive. Il est entendu que la masse totale de l'électrode n'inclut pas la masse du collecteur de courant.

Lorsque l'électrode positive comportera, en sus du carbone activé, du graphite, ce dernier remplira le rôle d'additif conducteur de l'électricité, et ne pourra servir de point de départ de la formation de la double couche électrochimique (en d'autres termes, on peut dire que ce graphite n'est pas un graphite activé). Une telle électrode peut être qualifiée d'électrode composite.

L'électrode négative, quant à elle, comprend, comme mentionné ci-dessus, un matériau carboné d'intercalation d'au moins un élément alcalin autre que le lithium, tel que le sodium, le potassium, le rubidium et/ou le césium, un matériau adapté de ce type étant, avantageusement, un matériau carboné du type graphitique, et plus spécifiquement un matériau carboné du type graphitique particulaire, dont la taille moyenne de particules peut aller de 1 à 10 $\mu$m, cette taille de particules étant mesurée par granulométrie laser $D_{50}$.

Au même titre que pour l'électrode positive, elle peut comprendre un ou plusieurs liants organiques, qui vont contribuer à assurer la cohésion mécanique de ladite électrode.

Ces liants organiques peuvent être, également, des liants polymériques comprenant un ou plusieurs polymères choisis parmi :

* les polymères fluorés, tels qu'un polytétrafluoroéthylène (connu sous l'abréviation PTFE), un polyfluorure de vinylidène (connu sous l'abréviation PVDF), un copolymère poly(fluorure de vinylidène-co-hexafluoropropène) (connu sous l'abréviation PVDF-HFP, un copolymère fluoré éthylène-propylène (connu sous l'abréviation FEP), un copolymère issu de la copolymérisation de tétrafluoroéthylène et du perfluoroalcoxyvinyléther (connu sous l'abréviation PFA) ;

*les polyimides ;

*les polyacrylonitriles ; et

*les mélanges de ceux-ci.

Avantageusement, ce ou ces liants sont présents en une teneur choisie de sorte à être la plus faible possible, sans que cela compromette la tenue mécanique au cours du cyclage sur l'ensemble de la gamme de températures d'utilisation, généralement comprise entre -40°C et la température d'ébullition du ou des solvants organiques.

Par exemple, le ou les liants peuvent être présents en une teneur inférieure ou égale à 15% massique par rapport à la masse totale de l'électrode, de préférence de 1 à 15% massique, de préférence, encore, de 2 à 7% massique par rapport à la masse totale de l'électrode. Il est entendu que la masse totale de l'électrode n'inclut pas la masse du collecteur de courant.

L'électrode négative peut comprendre, également, un additif carboné conducteur de l'électricité autre que le matériau d'intercalation carboné susmentionné, choisi parmi les noirs de carbone, les noirs d'acétylène, un graphite, les nanotubes de carbone, les fibres de carbone et les mélanges de ceux-ci, par exemple, les fibres de carbone obtenues en phase vapeur (connues sous l'abréviation VGCF), ledit additif carboné pouvant être présent en une teneur allant jusqu'à 15% massique par rapport à la masse totale de l'électrode négative, de préférence de 1 à 15% massique, de préférence encore de 2 à 10% massique par rapport à la masse totale de l'électrode négative. Il est entendu que la masse totale de l'électrode n'inclut pas la masse du collecteur de courant.

En outre, l'électrode négative peut comprendre, également, en sus du matériau apte à intercaler, lorsque celui-ci est du graphite, du carbone activé identique ou différent de celui de l'électrode positive, ce qui peut permettre d'améliorer les performances en puissance de l'électrode négative. Ce type d'électrode peut être ainsi qualifié d'électrode composite.

De préférence, l'électrolyte comporte au moins un sel de sodium et/ou un sel de potassium.

Lorsque l'électrode négative est à base d'un matériau carboné du type graphitique et que l'électrolyte comprend au moins un sel de sodium, le sodium a la capacité d' intercaler à des stades élevés de charge, de sorte à ce que la composition corresponde au plus à $NaC_{48}$, ce qui correspond à une quantité de sodium intercalée peu élevée (par rapport notamment au lithium, qui s'intercalerait pour former un composé d'intercalation de composition $LiC_6$), ce qui présente un avantage pour accéder à un système de puissance, car le phénomène de saturation de l'électrode négative sera atteint plus rapidement qu'avec du lithium, ce qui contribue à rendre cette électrode non limitante du point de vue performance.

Les mêmes remarques peuvent être reprises, lorsque l'électrolyte comprend au moins un sel de potassium, le potassium ayant quant à lui la capacité de s'intercaler, dans le graphite, à des stades élevés de charge, de sorte à ce que la composition corresponde au plus à $KC_8$, ce qui correspond à une quantité de potassium intercalée peu élevée, avec toutefois les avantages, que cela présente pour les performances de l'électrode.

Que ce soit l'électrode positive ou l'électrode négative, elles peuvent se présenter, notamment lorsque l'électrode négative est à base de graphite, sous forme d'une couche d'épaisseur donnée, ladite électrode négative présentant, avantageusement, une couche d'épaisseur plus élevée que la couche de ladite électrode positive. Ceci présente l'avantage d'induire une augmentation de la densité d'énergie, du fait notamment que le graphite entrant dans la constitution de l'électrode négative est environ 100 fois plus conducteur que les carbones activés commerciaux. Cela permet ainsi de pallier le fait qu'un supercondensateur présente, classiquement, une densité d'énergie plus faible que celle d'une batterie lithium-ion.

Avantageusement, l'électrode négative présente une masse surfacique supérieure à celle de l'électrode positive.

En effet, sans être lié par la théorie, ceci permet d'améliorer les performances des dispositifs de l'invention, notamment en termes de capacités.

L'électrolyte organique comprend, de préférence, un sel choisi parmi les sels de sodium, les sels de potassium et les mélanges de ceux-ci. Le fait d'utiliser du sodium ou du potassium, qui ne s'intercale qu'à un stade relativement faible présente l'avantage d'éviter la formation d'un placage métallique, comme cela peut être le cas avec le lithium, ce qui n'est pas sans poser de problèmes en termes de sécurité.

Concernant les sels de sodium, il peut s'agir d'un sel choisi parmi $NaClO_4$, $NaBF_4$, $NaPF_6$, le bis(trifluoromé-

thanesulfonyl)imide de sodium (connu sous l'abréviation NaTFSI), le bis(fluorosulfonyl)imide de sodium (connu sous l'abréviation NaFSI), le bis(oxalato)borate de sodium (connu sous l'abréviation NaBOB), NaSCN, NaSbF$_6$, NaAsF$_6$, NaAlCl$_4$, NaSiF$_6$, NaSO$_3$CF$_3$ et les mélanges de ceux-ci.

Concernant les sels de potassium, il peut s'agir d'un sel choisi parmi KClO$_4$, KBF$_4$, KPF$_6$, le bis(trifluorométhanesulfonyl)imide de potassium (connu sous l'abréviation KTFSI), le bis(fluorosulfonyl)imide de potassium (connu sous l'abréviation KFSI), le bis(oxalato)borate de potassium (connu sous l'abréviation KBOB), KSCN, KSbF$_6$, KAsF$_6$, KAlCl$_4$, KSiF$_6$, KSO$_3$CF$_3$ et les mélanges de ceux-ci.

Le ou les sels entrant dans la constitution des électrolytes de l'invention peuvent être utilisés sans l'adjonction de solvant(s), auquel cas on qualifie l'électrolyte résultant de liquide ionique ou en solution dans au moins un solvant organique, par exemple, à une concentration d'au moins égale à 0,05 mol/L et pouvant aller jusqu'à saturation du ou desdits solvants organiques à 25°C.

Le ou lesdits solvants organiques peuvent être choisis parmi :

- les solvants nitriles, tels que l'acétonitrile, le 3-méthoxypropionitrile (connu sous l'abréviation MPN), l'adiponitrile (connu sous l'abréviation ADP), le glutaronitrile (connu sous l'abréviation GN) ;
- les solvants carbonates, tels que le carbonate d'éthylène (connu sous l'abréviation EC), le carbonate de propylène (connu sous l'abréviation PC), le diméthylcarbonate (connu sous l'abréviation DMC), le diéthylcarbonate (connu sous l'abréviation DEC), l'éthylméthylcarbonate (connu sous l'abréviation EMC) ;
- les solvants lactones, tels que la γ-butyrolactone (connue sous l'abréviation GBL), la γ-valérolactone (connu sous l'abréviation GVL) ;
- les solvants sulfones, tels que la diméthylsulfone (connue sous l'abréviation DMS), l'éthylméthylsulfone (connue sous l'abréviation EMS), la diéthylsulfone (connue sous l'abréviation DES), le sulfolane (connu sous l'abréviation SL) ;
- les solvants lactames, tels que la N-méthylpyrrolidone (connue sous l'abréviation NMP) ;
- les solvants amides, tels que le N,N-diméthylformamide (connu sous l'abréviation DMF), le diméthylacétamide (connu sous l'abréviation DMA), le formamide (connu sous l'abréviation FA), le N-méthylformamide (connu sous l'abréviation NMF) ;
- les solvants cétones, tels que l'acétone, la méthyléthylcétone (connu sous l'abréviation MEK) ;
- les solvants nitroalcanes, tels que le nitrométhane (connu sous l'abréviation NM), le nitroéthane (connu sous l'abréviation NE) ;
- les solvants amines, tels que le 1,3-diaminopropane (connu sous l'abréviation DAP), l'éthylènediamine (connue sous l'abréviation EDA) ;
- les solvants sulfoxydes, tels que le diméthylsulfoxyde (connu sous l'abréviation DMSO) ;
- les solvants esters, tels que l'acétate d'éthyle (connu sous l'abréviation EA), l'acétate de méthyle (connu sous l'abréviation MA), l'acétate de propyle (connu sous l'abréviation AP) ;
- les solvants éthers linéaires, tels que le diméthoxyéthane (connu sous l'abréviation DME) ;
- les solvants éthers cycliques, tels que le dioxane, le dioxolane (connu sous l'abréviation DIOX), le tétrahydrofurane (connu sous l'abréviation THF) ;
- les solvants oxazolidones, tels que le 3-méthyl-2-oxazolidone ; et
- les mélanges de ceux-ci.

Lorsque l'électrolyte comprend au moins un sel de sodium, il comprend, avantageusement, un sel choisi parmi NaClO$_4$ NaPF$_6$, NaBF$_4$ et les mélanges de ceux-ci, en solution dans au moins un solvant choisi parmi les solvants carbonates, les solvants éthers linéaires, les solvants nitriles, les solvants lactones, les solvants amides et les mélanges de ceux-ci.

Plus spécifiquement, un électrolyte approprié est un électrolyte comprenant au moins un sel de sodium choisi parmi NaClO$_4$ NaPF$_6$, NaBF$_4$ et les mélanges de ceux-ci, en solution dans au moins un solvant choisi parmi le carbonate de propylène, le carbonate d'éthylène, le diéthylcarbonate, le diméthylcarbonate, le diméthoxyéthane, l'acétonitrile, la γ-butyrolactone, le diméthylformamide et les mélanges de ceux-ci.

Encore plus spécifiquement, des électrolytes comprenant au moins un sel de sodium approprié sont les électrolytes comprenant comme sel de sodium, du NaClO$_4$ NaPF$_6$ ou NaBF$_4$ (par exemple, 1M) en solution dans un solvant ou un mélange de solvants, tel que :

- du carbonate de propylène seul ;
- un mélange carbonate d'éthylène/diéthylcarbonate 1 :1;
- un mélange carbonate d'éthylène/diméthylcarbonate 1 :1;
- un mélange diméthoxyéthaane/carbonate de propylène 1 :2 ;
- de l'acétonitrile seul ;

- de la γ-butyrolactone seul ; ou
- du diméthylformamide seul.

Ces électrolytes spécifiques présentent l'avantage de concilier une conductivité élevée tout en étant peu onéreux, du fait des ingrédients les constituant, sachant que, pour information, $NaClO_4$ est dix fois moins onéreux qu'un sel de lithium classiquement utilisé dans les batteries lithium-ion, tel que $LiPF_6$.

Plus spécifiquement, lorsque l'électrode négative est une électrode composite telle qu'évoquée ci-dessus, un électrolyte spécifique adapté peut un électrolyte comprenant un mélange de sels, tels que les mélanges suivants :

- $TEAPF_6$ (tétraéthylammonium hexafluorophosphate) + $NaPF_6$ (par exemple, 1M) dans l'acétonitrile ; ou
- $TEABF_4$ (tétraéthylammonium tétrafluoroborate) +$NaPF_6$ (par exemple, 1M) dans l'acétonitrile.

Lorsque l'électrolyte comprend au moins un sel de potassium, il comprend, avantageusement, un sel choisi parmi $KClO_4$, $KPF_6$, $KBF_4$ et les mélanges de ceux-ci, en solution dans au moins un solvant choisi parmi les solvants carbonates, les solvants éthers linéaires, les solvants nitriles, les solvants lactones, les solvants amides et les mélanges de ceux-ci.

Plus spécifiquement, un électrolyte approprié est un électrolyte comprenant au moins un sel de potassium choisi parmi $KClO_4$, $KPF_6$, $KBF_4$ et les mélanges de ceux-ci, en solution dans un au moins un solvant choisi parmi le carbonate de propylène, le carbonate d'éthylène, le diéthylcarbonate, le diméthylcarbonate, le diméthoxyéthane, l'acétonitrile, la γ-butyrolactone, le diméthylformamide et les mélanges de ceux-ci.

Encore plus spécifiquement, des électrolytes comprenant au moins un sel de potassium appropriés sont les électrolytes comprenant comme sel de potassium, du $KClO_4$, $KPF_6$ ou $KBF_4$ (par exemple, 1M) en solution dans un solvant ou un mélange de solvants, tel que :

- du carbonate de propylène seul ;
- un mélange carbonate d'éthylène/diéthylcarbonate 1 :1;
- un mélange carbonate d'éthylène/diméthylcarbonate 1 :1;
- un mélange diméthoxyéthane/carbonate de propylène 1 :2 ;
- de l'acétonitrile seul ;
- de la γ-butyrolactone seul ; ou
- du diméthylformamide seul.

Ces électrolytes spécifiques présentent l'avantage de concilier une conductivité élevée tout en étant peu onéreux, du fait des ingrédients les constituant, sachant que, pour information, $KClO_4$ est vingt fois moins onéreux qu'un sel de lithium classiquement utilisé dans les batteries lithium-ion, tel que $LiPF_6$.

Plus spécifiquement, lorsque l'électrode négative est une électrode composite telle qu'évoquée ci-dessus, un électrolyte spécifique adapté peut un électrolyte comprenant un mélange de sels, tels que les mélanges suivants :

- $TEAPF_6$ (tétraéthylammonium hexafluorophosphate) + $KPF_6$ (par exemple, 1M) dans l'acétonitrile ;
- $TEABF_4$ (tétraéthylammonium tétrafluoroborate) +$KPF_6$ (par exemple, 1M) dans l'acétonitrile.

L'électrode positive et l'électrode négative peuvent être associées, chacune, à un collecteur de courant conducteur de l'électricité, ce collecteur de courant pouvant se présenter sous forme d'un feuillard métallique apposé sur l'une des faces desdites électrodes.

En particulier, du fait que le potentiel du couple $Na^+/Na$ et le potentiel du couple $K^+/K$ (respectivement +0,22 V vs $Li/Li^+$ et +0,12 V vs $Li/Li^+$) sont élevés, il est possible d'utiliser un collecteur en un matériau métallique choisi parmi le cuivre, l'aluminium, le nickel ou l'inox, avec pour préférence, un collecteur en aluminium, notamment pour des raisons de coûts. Qui plus est, l'utilisation du sodium ou du potassium dans l'électrolyte permet, en combinaison avec un collecteur en aluminium, d'utiliser de l'acétonitrile dans l'électrolyte, ce qui présente les avantages suivants :

- un très fort accroissement de la conductivité de l'électrolyte par rapport à des électrolytes lithiés ;
- la possibilité d'augmenter avantageusement les épaisseurs des électrodes, et donc d'augmenter la densité d'énergie.

Lorsque le solvant organique utilisé dans l'électrolyte est de l'acétonitrile, le dispositif de l'invention peut comprendre, en outre, un système d'évacuation de gaz, tel qu'un évent.

En effet, lors de durées de cyclage élevées, il peut se former un gaz, tel que de l'hydrogène, issu de la décomposition de l'acétonitrile, la formation de ce gaz pouvant entraîner des déformations locales au niveau du dispositif, ce qui peut induire un éloignement des électrodes et, de manière concomitante, une augmentation de la résistance interne.

En outre, lorsque le solvant organique utilisé dans l'électrolyte est de l'acétonitrile, l'électrolyte peut comprendre au moins un additif de nature à diminuer l'inflammabilité du solvant.

Le collecteur de courant peut être également un collecteur lisse ou un collecteur gravé au moins sur l'une de ses faces.

De préférence, lorsque le collecteur de courant est en cuivre, l'électrolyte ne comprend pas d'acétonitrile mais peut comprendre au moins un solvant carbonate, tel qu'un mélange de solvants carbonates.

D'autres caractéristiques apparaîtront mieux à la lecture du complément de description qui suit, lequel se rapporte à des exemples de supercondensateurs conformes à l'invention.

Bien entendu, les exemples qui suivent ne sont donnés qu'à titre d'illustration de l'objet de l'invention et ne constituent, en aucun cas, une limitation de cet objet.

## BRÈVE DESCRIPTION DES DESSINS

La figure 1 est un graphique illustrant l'évolution de la densité massique de capacité D (exprimée en mAh/g) en fonction du rapport $R_{e+/e-}$ pour différents supercondensateurs exposés au paragraphe g) de l'exemple 1.

La figure 2 est un graphique illustrant l'évolution de la densité massique de capacité D (exprimée en mAh/g) en fonction du rapport $R_{e+/e-}$ pour différents supercondensateurs exposés au paragraphe g) de l'exemple 2.

La figure 3 est un graphique illustrant l'évolution de la tension U (en V) en fonction de la durée T (en s) pour un supercondensateur conforme à l'invention et un supercondensateur non conforme à l'invention soumis à des régimes de charge/décharge conformément à ce qui est exposé au paragraphe g) de l'exemple 1.

La figure 4 est un graphique illustrant l'évolution de la tension U (en V) en fonction de la durée T (en s) pour un supercondensateur conforme à l'invention et un supercondensateur non conforme à l'invention soumis à des régimes de charge/décharge conformément à ce qui est exposé au paragraphe g) de l'exemple 2.

La figure 5 est un graphique illustrant l'évolution de l'intensité I (en mA) en fonction du potentiel E (en V) pour un supercondensateur conforme à l'invention avec un électrolyte comprenant de l'acétonitrile et un sel de potassium conforme à la partie a) de l'exemple 3.

La figure 6 est un graphique illustrant l'évolution de l'intensité I (en mA) en fonction du potentiel E (en V) pour un supercondensateur conforme à l'invention avec un électrolyte comprenant de l'acétonitrile et un sel de potassium conforme à la partie b) de l'exemple 3.

La figure 7 est un graphique illustre un voltammogramme obtenu avec un supercondensateur hybride classique.

Les figures 8 à 11 sont des graphiques illustrant des voltammogrammes (I (en mA) en fonction du potentiel E (en V)) pour différentes cellules de l'exemple 4 (partie a).

La figure 12 est un graphique illustrant un voltammogramme obtenu par cyclage entre 1,5 et 3,2 V (3 cycles) et par cyclage entre 1,5 et 3,7 V (3 cycles) avec la deuxième cellule de l'exemple 4 (partie b).

La figure 13 est un graphique illustrant un voltammogramme obtenu dans le cadre du test réalisé à l'exemple 5 (partie a).

## EXPOSÉ DÉTAILLÉ DE MODES DE RÉALISATION PARTICULIERS

EXEMPLE COMPARATIF 1

Cet exemple illustre la préparation de différents supercondensateurs non conformes à l'invention, dont les modes de préparation figurent ci-dessous.

a)Réalisation d'un premier supercondensateur non conforme à l'invention

Le premier supercondensateur non conforme à l'invention est préparé avec une électrode positive et une électrode négative identiques, c'est-à-dire de même nature et de même grammage, lesdites électrodes étant préparées par enduction sur un collecteur en aluminium gravé de 30 $\mu$m d'épaisseur d'une composition comprenant :

- 84% de carbone activé de référence YP50F (obtenu auprès de Kuraray Chemicals Co., Japon) ;
- 4% d'un caoutchouc styrène-butadiène (obtenu auprès de BASF, LD417) ;
- 8% de noir de carbone de référence superC65 (obtenu auprès de Timcal Co., Suisse) ;
- 4% de carboxyméthylcellulose de masse moléculaire en masse de 300 000 (obtenu auprès de Aldrich) ;

les % étant des pourcentages massiques exprimés par rapport à la masse totale de l'électrode hormis le collecteur de courant,

lesdites électrodes présentant une épaisseur de 158 $\mu$m (collecteur inclus) et une masse de matériau actif de 21,4 mg.

Les électrodes susmentionnées d'un diamètre de 14 mm sont assemblées dans une cellule bouton. L'électrolyte utilisé est du $NaPF_6$ (1M) dans l'acétonitrile et est utilisé avec une quantité suffisante pour imprégner l'ensemble de la cellule bouton. Le séparateur utilisé est du PDA25® (qui correspond à du polypropylène) (obtenu auprès de Treofan GmbH, Allemagne) de 25 $\mu$m d'épaisseur.

Le système est testé *via* un cyclage galvanostatique. Les capacités volumique et gravimétrique sont mesurées, après 10 cycles entre 0V et 2,5V à un régime de 0,3 A/g (gramme d'électrodes), entre 2,43 V et 1,35 V par application d'une régression linéaire sur la courbe de décharge.

b) Réalisation d'un deuxième supercondensateur non conforme à l'invention

Dans ce mode de réalisation, l'électrolyte du mode a) est remplacé par $NaClO_4$ 1M dans l'acétonitrile. Les électrodes ont une épaisseur de 135 $\mu$m (collecteur inclus) correspondant à 15 mg de matériau actif par électrode.

c) Réalisation d'un troisième supercondensateur non conforme à l'invention

Dans ce mode de réalisation, l'électrolyte du mode a) est remplacé par du $LiPF_6$ 1M dans un mélange EC/PC/DMC (1/1/1). Les électrodes ont une épaisseur de 160 $\mu$m (collecteur inclus) correspondant à 21,1 mg de matériau actif par électrode.

d) Résultats

Le tableau ci-dessous présente les résultats obtenus avec les modes de réalisation a) à c) en termes de capacités massique et de densité massique des électrodes.

| Modes | Capacité massique (en F/g) | Densité d'énergie massique (Wh/kg) |
|---|---|---|
| a | 32 | 27,1 |
| b | 34,4 | 25,2 |
| c | 31,1 | 26,1 |

Ces résultats montrent que le changement d'un sel lithié par un sel contenant du sodium n'a pas d'effet sur la capacité massique et la densité d'énergie massique de supercondensateurs testés, ce qui pourrait laisser penser que l'utilisation d'un sel contenant du sodium est équivalente à celle d'un sel lithié en termes de résultats.

EXEMPLE 1

Cet exemple illustre la préparation de différents supercondensateurs de puissance à haute densité d'énergie conformes à l'invention et, à titre comparatif, de supercondensateurs non conformes à l'invention.

a) Réalisation d'un premier supercondensateur conforme à l'invention

Dans un premier temps, il est procédé à la préparation d'une électrode positive et d'une électrode négative.

L'électrode positive est préparée par enduction sur un collecteur en aluminium gravé de 30 $\mu$m d'épaisseur d'une composition comprenant :

- 84% de carbone activé de référence YP50F (obtenu auprès de Kuraray Chemicals Co., Japon) ;
- 4% d'un caoutchouc styrène-butadiène (obtenu auprès de BASF, LD417) ;
- 8% de noir de carbone de référence superC65 (obtenu auprès de Timcal Co., Suisse) ;
- 4% de carboxyméthylcellulose de masse moléculaire en masse de 300 000 (obtenu auprès de Aldrich) ;

les % étant des pourcentages massiques exprimés par rapport à la masse totale de l'électrode hormis le collecteur de courant,

cette électrode présentant une épaisseur de 156 $\mu$m (collecteur inclus) et présentant une masse de matériau actif de 15,8 mg.

L'électrode négative est préparée par enduction sur un collecteur en aluminium gravé de 30 μm d'épaisseur d'une composition comprenant :

- 91,7% de graphite de référence KS6 (obtenu auprès de Timcal Co., Suisse) ;
- 3,15% d'un caoutchouc styrène-butadiène (obtenu auprès de BASF, LD417) ;
- 3,15% de noir de carbone de référence superC65 (obtenu auprès de Timcal Co., Suisse) ;
- 2% de carboxyméthylcellulose de masse moléculaire en masse ($M_w$) de 300 000 (obtenu auprès de Aldrich) ;

les % étant des pourcentages massiques exprimés par rapport à la masse totale de l'électrode hormis le collecteur de courant,
cette électrode présentant une épaisseur de 59 μm (collecteur exclus) et présentant une masse de matériau actif de 19 mg.

Les électrodes susmentionnées d'un diamètre de 14 mm sont assemblées dans une cellule bouton. L'électrolyte utilisé est du $NaPF_6$ (1M) dans l'acétonitrile et est utilisé avec une quantité suffisante pour imprégner l'ensemble de la cellule bouton. Le séparateur utilisé est du PDA25 ® (qui correspond à du polypropylène) (obtenu auprès de Treofan GmbH, Allemagne) de 25 μm d'épaisseur.

Le système est testé *via* un cyclage galvanostatique. La densité d'énergie est mesurée après 10 cycles entre 0V et 2,5V à un régime de 0,1A/g (gramme d'électrodes).

b) Réalisation d'un deuxième supercondensateur conforme à l'invention

Ce deuxième supercondensateur est réalisé selon un protocole similaire à celui exposé au paragraphe a) ci-dessus, si ce n'est que l'électrolyte est remplacé par du $NaClO_4$ 1M dans l'acétonitrile.

c) Réalisation d'un troisième supercondensateur conforme à l'invention

Ce troisième supercondensateur est réalisé selon un protocole similaire à celui exposé au paragraphe a) ci-dessus, si ce n'est que l'électrolyte est remplacé par du $NaClO_4$ 1M dans un mélange carbonate d'éthylène/diméthylcarbonate.

d) Réalisation d'un quatrième supercondensateur non conforme à l'invention

Ce quatrième supercondensateur est réalisé selon un protocole similaire à celui exposé au paragraphe a) ci-dessus, si ce n'est que le carbone activé est placé à l'électrode négative et le graphite à l'électrode positive.

e) Réalisation d'un cinquième supercondensateur non conforme à l'invention

Ce cinquième supercondensateur est réalisé selon un protocole similaire à celui exposé au paragraphe a) ci-dessus, si ce n'est que l'électrolyte est remplacé par du $LiPF_6$ 1M dans l'acétonitrile.

f) Résultats

Les cyclages ont été réalisés entre 0 et 2,5 V et il a été procédé, pour chacun des supercondensateurs réalisés, à la mesure de l'énergie massique E (exprimée en Wh/kg) et de la puissance massique P (exprimée en W/kg) à 72 s.
Les résultats obtenus figurent dans le tableau ci-dessous.

|  | E (en Wh/kg) | P (en W/kg) à 72s |
|---|---|---|
| Premier supercondensateur | 6,4 | 180 |
| Deuxième supercondensateur | 4,6 | 120 |
| Troisième supercondensateur | 1,03 | 70 |
| Quatrième supercondensateur | 0 | 0 |
| Cinquième supercondensateur | Non mesurable car corrosion | Non mesurable car corrosion |

On constate que, pour les supercondensateurs conformes à l'invention, l'on obtient des valeurs élevées tant en termes d'énergie massique que de puissance massique.

Concernant le quatrième supercondensateur non conforme à l'invention, aucune capacité n'a pu être mesurée, ce qui s'explique par le fait que le sodium ne peut s'intercaler qu'à l'électrode négative et que le carbone activé présent au niveau de cette électrode négative n'est pas approprié pour permettre une intercalation du sodium.

Concernant le cinquième supercondensateur non conforme à l'invention, l'on observe la formation d'un alliage lithium-aluminium par l'acétonitrile entraînant la dégradation totale de l'électrode négative. Cela interdit donc l'utilisation combinée du lithium, de l'aluminium et de l'acétonitrile.

g) Comparaison de profils de tension entre un supercondensateur de l'invention et un supercondensateur non conforme à l'invention.

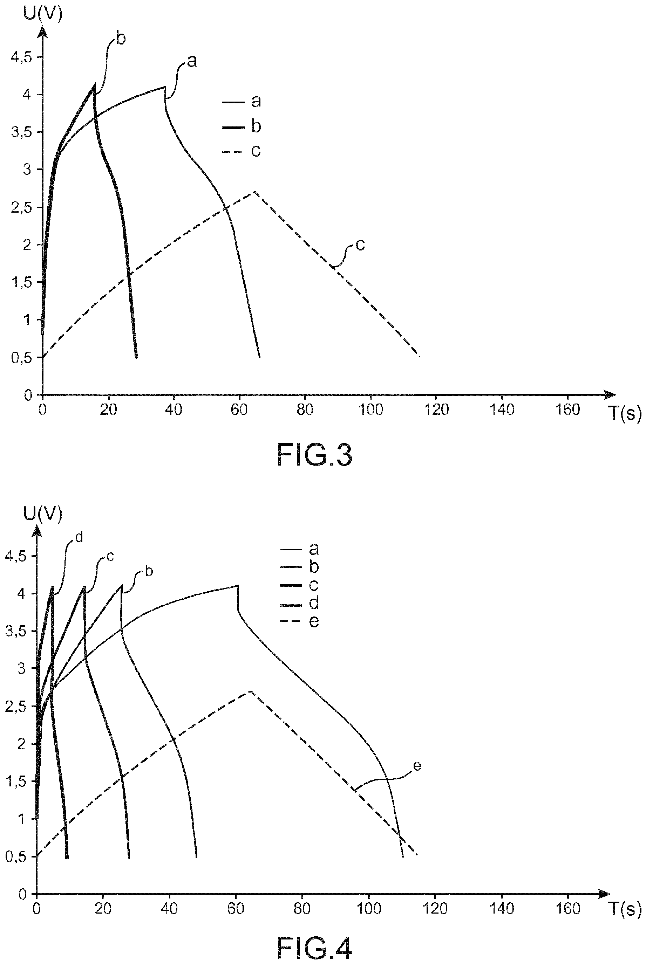

Un supercondensateur conforme au premier supercondensateur susmentionné est soumis à plusieurs régimes de charge/décharge (respectivement, à 0,6 A/g de matériau actif et 1,25 A/g de matériau actif), l'évolution de la tension U (en V) en fonction de la durée T (en s) étant illustrée par les courbes a) et b) de la figure 3 jointe en annexe.

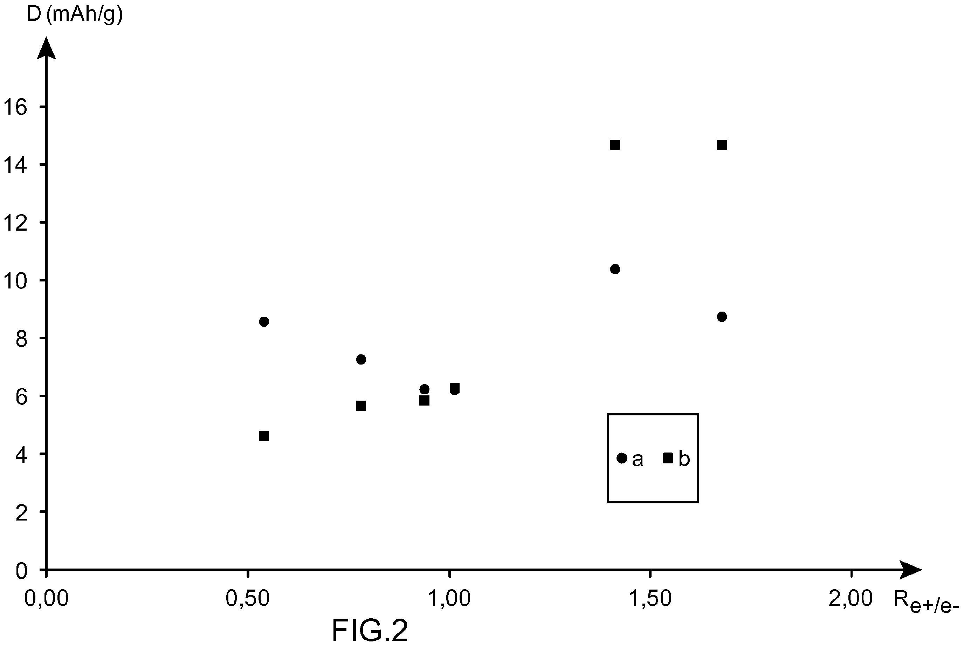

Un supercondensateur non conforme à l'invention correspond au supercondensateur du mode a) de l'exemple comparatif 1 si ce n'est que l'électrolyte est remplacé par du $TEABF_4$ 1M dans l'acétonitrile, ce supercondensateur étant soumis à un régime de charge/décharge à 0,6 A/g, l'évolution de la tension U (en V) en fonction de la durée T (en s) étant illustrée par la courbe c) de la figure 2 jointe en annexe.

Pour un régime de charge identique, il a été constaté que l'énergie massique est 20% plus élevée dans le cas du supercondensateur conforme à l'invention.

h) Proposition de maximisation de la densité d'énergie des supercondensateurs de l'invention

Une manière de maximiser la densité d'énergie émise par un supercondensateur est d'équilibrer la densité d'énergies de ces deux électrodes. Pour ce faire, il est nécessaire de déterminer la capacité des matériaux d'électrode constitutifs des supercondensateurs de l'invention.

Un plan d'expériences a été élaboré pour tester les effets des différents ratios d'épaisseur pour l'électrode positive et l'électrode négative des supercondensateurs conformes à l'invention et trouver notamment le rapport optimal pour l'obtention de la densité d'énergie maximale. Ce plan a été réalisé avec des supercondensateurs similaires à celui décrit en a), à savoir notamment avec un électrolyte $NaPF_6$ 1M dans l'acétonitrile, si ce n'est que l'on a fait varier respectivement les rapports d'épaisseurs entre les électrodes positives et négatives, les teneurs en matériau actif et les masses de matériau actif utilisé (les matériaux actifs étant respectivement le carbone activé, nommé ci-dessous « matériau actif + », pour les électrodes positives et du graphite, nommé ci-dessous « matériau actif -« pour les électrodes négatives).

Le tableau ci-dessous regroupe les caractéristiques des supercondensateurs testées, les caractéristiques étant les suivantes :

- le rapport des masses de matériaux actifs des électrode positive sur électrode négative, intitulé R e$^+$/e$^-$;
- le pourcentage massique du matériau actif+, intitulé %mat+;
- le pourcentage massique du matériau actif -, intitulé %mat-;
- la masse totale de l'électrode positive, intitulée mtot+, exprimée en mg;
- la masse totale de l'électrode négative, intitulée mtot-, exprimée en mg;
- la masse totale utilisée de matériau actif positif, intitulée mact+, exprimée en mg ;
- la masse totale utilisée de matériau actif négatif, intitulée mact-, exprimée en mg;
- l'épaisseur de l'électrode positive, intitulée e+, exprimée en $\mu$m ;
- l'épaisseur de l'électrode négative, intitulée e-, exprimée en $\mu$m.

| R e$^+$/e$^-$ | %mat+ | %mat- | mtot+ | mtot- | mact+ | mact- | e+ | e- |
|---|---|---|---|---|---|---|---|---|
| 0,39 | 81 | 92,8 | 15,8 | 31,1 | 10,0 | 25,6 | 76 | 80 |
| 0,41 | 81 | 91,8 | 18,8 | 36,1 | 12,4 | 30,0 | 106 | 121 |
| 0,61 | 81 | 91,7 | 15,8 | 21,3 | 10,0 | 16,3 | 76 | 49 |
| 0,625 | 81 | 91,7 | 15,9 | 21,0 | 10,0 | 16,0 | 78 | 45 |
| 0,79 | 81 | 91,7 | 18,9 | 20,7 | 12,5 | 15,8 | 106 | 44 |

(suite)

| R e⁺/e⁻ | %mat+ | %mat- | mtot+ | mtot- | mact+ | mact- | e+ | e- |
|---|---|---|---|---|---|---|---|---|
| 0,83 | 84 | 91,7 | 22,3 | 24,3 | 15,8 | 19,0 | 156 | 69 |
| 1,41 | 81 | 91,7 | 36,9 | 24,3 | 27,1 | 19,1 | 305 | 68 |
| 1,51 | 81 | 91,7 | 32,9 | 21,1 | 23,0 | 15,2 | 269 | 48 |

Au même titre que pour le supercondensateur élaboré en a), les supercondensateurs, dont les caractéristiques sont exposées dans le tableau ci-dessus, son élaborées en boîte à gants et testées en cyclage. La première étape de formation consiste à réaliser un cyclage galvanostatique à faible courant (ici, 100 $\mu$A, soit 3 à 6 mA/g, ce qui correspond à une charge/décharge à C/2 environ pour l'électrode négative).

Les capacités des piles ont été mesurées ($Q_{pile}$) et, avec les valeurs obtenues, il a été déterminé les densités massiques de capacité de l'électrode positive et de l'électrode négative (respectivement $Q^+$ et $Q^-$), exprimées en mAh/g, par le biais des formules suivantes :

$$Q^+=(Qpile/mtot^+)$$

$$Q^-=(Qpile/mtot^-)$$

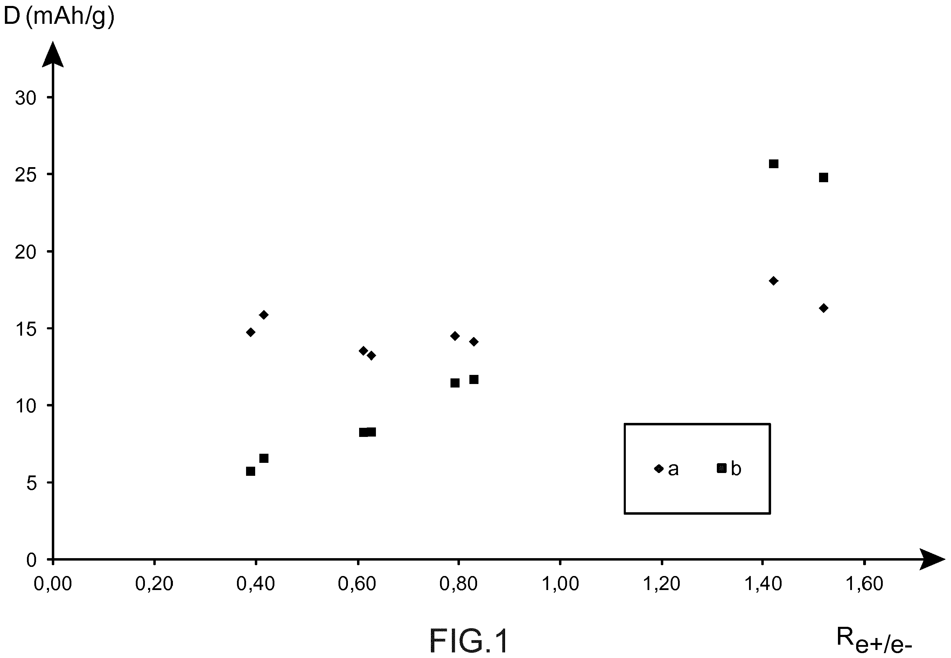

Comme il ressort du graphique de la figure 1 (respectivement courbe a) pour $Q^+$ et courbe b) pour $Q^-$ pour un test à 2 mA), le rapport Re⁺/e⁻ influe peu sur $Q^+$. Concernant $Q^-$, la courbe se décompose en un domaine linéaire, où $Q^-$ augmente linéairement en fonction de Re⁺/e⁻.

Cela est conforme à la théorie : l'électrode négative est beaucoup plus capacitive que l'électrode positive. Le fait de ne pas intercaler complètement l'électrode négative permet d'accéder à un niveau de puissance élevée. Pour un rapport Re⁺/e⁻ = 1, les capacités des deux électrodes sont identiques.

## EXEMPLE COMPARATIF 2

Cet exemple illustre la préparation de différents supercondensateurs non conformes à l'invention, dont les modes de préparation figurent ci-dessous.

### a) Réalisation d'un premier supercondensateur non conforme à l'invention

Le premier supercondensateur non conforme à l'invention est préparé avec une électrode positive et une électrode négative identiques, c'est-à-dire de même nature et de même grammage, lesdites électrodes étant préparées par enduction sur un collecteur en aluminium gravé de 30 $\mu$m d'épaisseur d'une composition comprenant :

- 84% de carbone activé de référence YP50F (obtenu auprès de Kuraray Chemicals Co., Japon) ;
- 4% d'un caoutchouc styrène-butadiène (obtenu auprès de BASF, LD417) ;
- 8% de noir de carbone de référence superC65 (obtenu auprès de Timcal Co., Suisse) ;
- 4% de carboxyméthylcellulose de masse moléculaire en masse de 300 000 (obtenu auprès de Aldrich) ;

les % étant des pourcentages massiques exprimés par rapport à la masse totale de l'électrode hormis le collecteur de courant,

lesdites électrodes présentant une épaisseur de 106 $\mu$m (collecteur inclus) et une masse de matériau actif de 15,9 mg.

Les électrodes susmentionnées d'un diamètre de 14 mm sont assemblées dans une cellule bouton. L'électrolyte utilisé est du KPF$_6$ (1M) dans l'acétonitrile et est utilisé avec une quantité suffisante pour imprégner l'ensemble de la cellule bouton. Le séparateur utilisé est du PDA25® (qui correspond à du polypropylène) (obtenu auprès de Treofan GmbH, Allemagne) de 25 $\mu$m d'épaisseur.

Le système est testé *via* un cyclage galvanostatique. Les capacités volumique et gravimétrique sont mesurées, après 10 cycles entre 0V et 2,5V à un régime de 0,3A/g (gramme d'électrodes), entre 2,43 V et 1,35 V par application d'une régression linéaire sur la courbe de décharge.

b) Réalisation d'un deuxième supercondensateur non conforme à l'invention

Dans ce mode de réalisation, l'électrolyte du mode a) est remplacé par KClO$_4$ 1M dans l'acétonitrile. Les électrodes ont une épaisseur de 150 $\mu$m (collecteur inclus) correspondant à 21 mg de matériau actif par électrode.

c) Réalisation d'un troisième supercondensateur non conforme à l'invention

Dans ce mode de réalisation, l'électrolyte du mode a) est remplacé par du LiPF$_6$ 1M dans un mélange EC/PC/DMC (1/1/1). Les électrodes ont une épaisseur de 160 $\mu$m (collecteur inclus) correspondant à 21,1 mg de matériau actif par électrode.

d) Résultats

Le tableau ci-dessous présente les résultats obtenus avec les modes de réalisation a) à c) en termes de capacités massique et de densité massique des électrodes.

| Modes | Capacité massique (en F/g) | Densité d'énergie massique (Wh/kg) |
|-------|----------------------------|-------------------------------------|
| a | 26,6 | 20,3 |
| b | 35,3 | 28,4 |
| c | 31,1 | 26,1 |

Ces résultats montrent que le changement d'un sel lithié par un sel contenant du potassium n'a pas d'effet sur la capacité massique et la densité d'énergie massique de supercondensateurs testés, ce qui pourrait laisser penser que l'utilisation d'un sel contenant du sodium est équivalente à celle d'un sel lithié en termes de résultats.

EXEMPLE 2

Cet exemple illustre la préparation de différents supercondensateurs de puissance à haute densité d'énergie conformes à l'invention et, à titre comparatif, de supercondensateurs non conformes à l'invention.

a) Réalisation d'un premier supercondensateur conforme à l'invention

Dans un premier temps, il est procédé à la préparation d'une électrode positive et d'une électrode négative.
L'électrode positive est préparée par enduction sur un collecteur en aluminium gravé de 30 $\mu$m d'épaisseur d'une composition comprenant :

- 84% de carbone activé de référence YP50F (obtenu auprès de Kuraray Chemicals Co., Japon) ;
- 4% d'un caoutchouc styrène-butadiène (obtenu auprès de BASF, LD417) ;
- 8% de noir de carbone de référence superC65 (obtenu auprès de Timcal Co., Suisse) ;
- 4% de carboxyméthylcellulose de masse moléculaire en masse de 300 000 (obtenu auprès de Aldrich) ;

les % étant des pourcentages massiques exprimés par rapport à la masse totale de l'électrode hormis le collecteur de courant,
cette électrode présentant une épaisseur de 168 $\mu$m (collecteur inclus) et présentant une masse de matériau actif de 17,8 mg.
L'électrode négative est préparée par enduction sur un collecteur en aluminium gravé de 30 $\mu$m d'épaisseur d'une composition comprenant :

- 91,7% de graphite de référence KS6 (obtenu auprès de Timcal Co., Suisse) ;
- 3,15% d'un caoutchouc styrène-butadiène (obtenu auprès de BASF, LD417) ;
- 3,15% de noir de carbone de référence superC65 (obtenu auprès de Timcal Co., Suisse) ;
- 2% de carboxyméthylcellulose de masse moléculaire en masse (M$_w$) de 300 000 (obtenu auprès de Aldrich) ;

les % étant des pourcentages massiques exprimés par rapport à la masse totale de l'électrode hormis le collecteur de courant,

cette électrode présentant une épaisseur de 66 μm (collecteur exclus) et présentant une masse active de 18,9 mg.

Les électrodes susmentionnées d'un diamètre de 14 mm sont assemblées dans une cellule bouton. L'électrolyte utilisé est du $KPF_6$ (1M) dans l'acétonitrile et est utilisé avec une quantité suffisante pour imprégner l'ensemble de la cellule bouton. Le séparateur utilisé est du PDA25 ® (qui est du polypropylène) (obtenu auprès de Treofan GmbH, Allemagne) de 25 μm d'épaisseur.

Le système est testé *via* un cyclage galvanostatique. La densité d'énergie est mesurée après 10 cycles entre 0V et 2,5V à un régime de 0,1A/g (gramme d'électrodes).

b) Réalisation d'un deuxième supercondensateur conforme à l'invention

Ce deuxième supercondensateur est réalisé selon un protocole similaire à celui exposé au paragraphe a) ci-dessus, si ce n'est que l'électrolyte est remplacé par du $KPF_6$ 1M dans un mélange carbonate d'éthylène/diméthylcarbonate.

c) Réalisation d'un troisième supercondensateur conforme à l'invention

Ce troisième supercondensateur est réalisé selon un protocole similaire à celui exposé au paragraphe a) ci-dessus, si ce n'est que l'électrolyte est remplacé par du $KClO_4$ 1M dans un mélange carbonate d'éthylène/diméthylcarbonate.

d) Réalisation d'un quatrième supercondensateur non conforme à l'invention

Ce quatrième supercondensateur est réalisé selon un protocole similaire à celui exposé au paragraphe a) ci-dessus, si ce n'est que le carbone activé est placé à l'électrode négative et le graphite à l'électrode positive.

e) Réalisation d'un cinquième supercondensateur non conforme à l'invention

Ce cinquième supercondensateur est réalisé selon un protocole similaire à celui exposé au paragraphe a) ci-dessus, si ce n'est que l'électrolyte est remplacé par du $LiPF_6$ 1M dans l'acétonitrile.

f) Résultats

Les cyclages ont été réalisés entre 0 et 2,5 V et il a été procédé, pour chacun des supercondensateurs réalisés, à la mesure de l'énergie massique E (exprimée en Wh/kg) et de la puissance massique P (exprimée en W/kg) à 72 s.

Les résultats obtenus figurent dans le tableau ci-dessous.

|  | E (en Wh/kg) | P (en W/kg) à 72s |
|---|---|---|
| Premier supercondensateur | 5,0 | 250 |
| Deuxième supercondensateur | 1,2 | 60 |
| Troisième supercondensateur | 1,4 | 65 |
| Quatrième supercondensateur | 0 | 0 |
| Cinquième supercondensateur | Non mesurable car corrosion | Non mesurable car corrosion |

On constate que, pour les supercondensateurs conformes à l'invention, l'on obtient des valeurs élevées tant en termes d'énergie massique que de puissance massique.

Concernant le quatrième supercondensateur non conforme à l'invention, aucune capacité n'a pu être mesurée, ce qui s'explique par le fait que le sodium ne peut s'intercaler qu'à l'électrode négative et que le carbone activé présent au niveau de cette électrode négative n'est pas approprié pour permettre une intercalation du sodium.

Concernant le cinquième supercondensateur non conforme à l'invention, l'on observe la formation d'un alliage lithium-aluminium.

Cela interdit donc l'utilisation combinée du lithium, de l'aluminium et de l'acétonitrile.

g) Comparaison de profils de tension entre un supercondensateur de l'invention et un supersondateur non conforme à l'invention

Un supercondensateur conforme au premier supercondensateur susmentionné est soumis à plusieurs régimes de charge/décharge (respectivement, à 0,6 A/g de matériau actif, 1,25 A/g de matériau actif, 1,85 A/g de matériau actif et 3,7 A/g de matériau actif), l'évolution de la tension U (en V) en fonction de la durée T (en s) étant illustrée par les courbes a) à d) de la figure 3 jointe en annexe.

Un supercondensateur non conforme à l'invention correspond au supercondensateur du mode a) de l'exemple comparatif 1 si ce n'est que l'électrolyte est remplacé par du $TEABF_4$ 1M dans l'acétonitrile, ce supercondensateur étant soumis à un régime de charge/décharge à 0,6 A/g, l'évolution de la tension U (en V) en fonction de la durée T (en s) étant illustrée par la courbe e) de la figure 4 jointe en annexe.

Pour un régime de charge identique, il a été constaté que l'énergie massique est 1,9 fois plus élevée dans le cas du supercondensateur conforme à l'invention.

h) Proposition de maximisation de la densité d'énergie des supercondensateurs de l'invention

Une manière de maximiser la densité d'énergie émise par un supercondensateur est d'équilibrer la densité d'énergie de ces deux électrodes. Pour ce faire, il est nécessaire de déterminer la capacité des matériaux d'électrode constitutifs des supercondensateurs de l'invention.

Un plan d'expériences a été élaboré pour tester les effets des différents ratios d'épaisseur pour l'électrode positive et l'électrode négative des supercondensateurs conformes à l'invention et trouver notamment le rapport optimal pour l'obtention de la densité d'énergie maximale. Ce plan a été réalisé avec des supercondensateurs à celui décrit en a), à savoir notamment avec un électrolyte $KPF_6$ 1M dans l'acétonitrile, si ce n'est que l'on a fait varier respectivement les rapports d'épaisseurs entre les électrodes, les teneurs en matériau actif et les masses de matériau actif utilisé (les matériaux actifs étant respectivement le carbone activé, nommé ci-dessous « matériau actif + », pour les électrodes positives et du graphite, nommé ci-dessous « matériau actif-« pour les électrodes négatives).

Le tableau ci-dessous regroupe les caractéristiques des supercondensateurs testées, les caractéristiques étant les suivantes :

- le rapport des masses de matériaux actifs des électrode positive sur l'électrode positive, intitulé $R\,e^+/e^-$;
- le pourcentage massique du matériau actif+, intitulé %mat+;
- le pourcentage massique du matériau actif -, intitulé %mat-;
- la masse totale de l'électrode positive, intitulée mtot+, exprimée en mg;
- la masse totale de l'électrode négative, intitulée mtot-, exprimée en mg;
- la masse totale utilisée de matériau actif positif, intitulée mact+, exprimée en mg ;
- la masse totale utilisée de matériau actif négatif, intitulée mact-, exprimée en mg;
- l'épaisseur de l'électrode positive, intitulée e+, exprimée en $\mu$m ;
- l'épaisseur de l'électrode négative, intitulée e-, exprimée en $\mu$m.

| $R\,e^+/e^-$ | %mat+ | %mat- | mtot+ | mtot- | mact+ | mact- | e+ | e- |
|---|---|---|---|---|---|---|---|---|
| 0,54 | 81 | 90,8 | 18,6 | 28,5 | 12,2 | 22,7 | 108 | 84 |
| 0,78 | 81 | 91,7 | 23,5 | 27,5 | 17,2 | 22,0 | 157 | 70 |
| 0,94 | 86 | 91,7 | 24,2 | 24,1 | 17,8 | 18,9 | 168 | 66 |
| 1,02 | 81 | 91,7 | 27,3 | 24,3 | 19,3 | 19,0 | 125 | 68 |
| 1,41 | 81 | 91,7 | 31,2 | 20,8 | 22,4 | 15,9 | 250 | 47 |
| 1,68 | 81 | 91,7 | 36,9 | 21,1 | 27,1 | 16,1 | 305 | 46 |

Au même titre que pour le supercondensateur élaboré en a), les supercondensateurs, dont les caractéristiques sont exposées dans le tableau ci-dessus, son élaborées en boîte à gants et testées en cyclage. La première étape de formation consiste à réaliser un cyclage galvanostatique à faible courant (ici, 100 $\mu$A, soit 3 à 6 mA/g, ce qui correspond à une charge/décharge à C/2 environ pour l'électrode négative).

Les capacités des piles ont été mesurées ($Q_{pile}$) et, avec les valeurs obtenues, il a été déterminé les densités massiques de capacité de l'électrode positive et de l'électrode négative (respectivement $Q^+$ et $Q^-$), exprimées en mAh/g, par le biais des formules suivantes :

$$Q^+=(Qpile/mtot^+)$$

$$Q^-=(Qpile/mtot^-)$$

Comme il ressort de la figure 2 (respectivement courbe a) pour $Q^+$ et courbe b) pour $Q^-$ pour un test à 2 mA), le rapport $Re^+/e^-$ influe peu sur $Q^+$. Concernant $Q^-$, la courbe se décompose en un domaine linéaire, où $Q^-$ augmente linéairement en fonction de $Re^+/e^-$. Cela est conforme à la théorie : l'électrode négative est beaucoup plus capacitive que l'électrode positive. Le fait de ne pas intercaler complètement l'électrode négative permet d'accéder à un niveau de puissance élevée. Pour un rapport $Re^+/e^- = 1$, les capacités des 2 électrodes sont identiques.

EXEMPLE 3

Cet exemple vise à démontrer l'intérêt à utiliser, comme solvant, de l'acétonitrile dans les dispositifs de l'invention en vue de lui conférer de bonnes performances, que l'électrolyte soit à base d'une sel de potassium (partie a) de cet exemple) ou d'un sel de sodium (partie b) de cet exemple).

a) Test réalisé avec un dispositif conforme à l'invention avec un électrolyte à base d'un sel de potassium

Dans un premier temps, il est procédé à la préparation d'une électrode positive et d'une électrode négative.
L'électrode positive est préparée par enduction sur un collecteur en aluminium gravé de 30 $\mu$m d'épaisseur d'une composition comprenant :

- 84% de carbone activé de référence YP50F (obtenu auprès de Kuraray Chemicals Co., Japon) ;
- 4% d'un caoutchouc styrène-butadiène (obtenu auprès de BASF, LD417) ;
- 8% de noir de carbone de référence superC65 (obtenu auprès de Timcal Co., Suisse) ;
- 4% de carboxyméthylcellulose de masse moléculaire en masse de 300 000 (obtenu auprès de Aldrich) ;

les % étant des pourcentages massiques exprimés par rapport à la masse totale de l'électrode hormis le collecteur de courant.
L'électrode négative est préparée par enduction sur un collecteur en aluminium gravé de 30 $\mu$m d'épaisseur d'une composition comprenant :

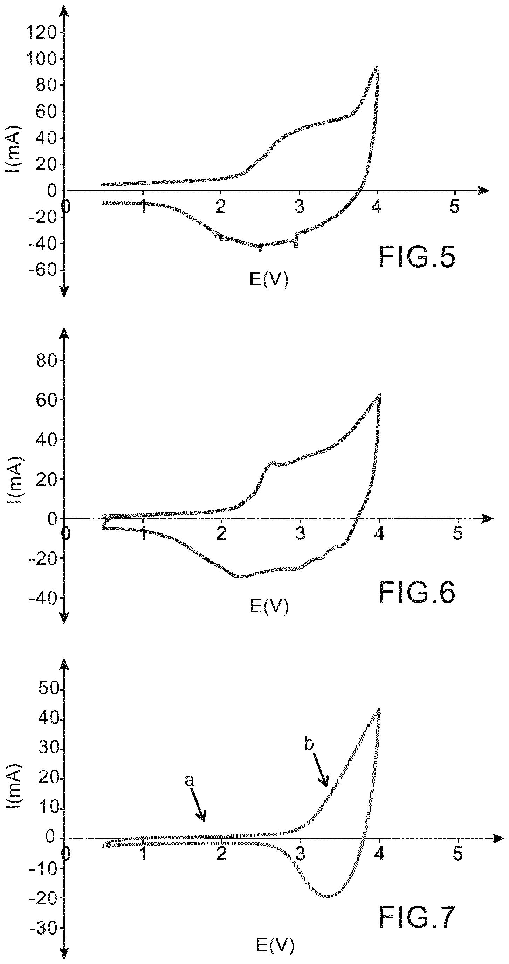

- 94% de graphite de référence SLP30 (obtenu auprès de Timcal Co., Suisse) ;
- 2% de carbone conducteur VGCF (abréviation correspondant à la terminologie anglo-saxonne « Vapor Grown Carbon Fiber) ;
- 2% de carboxyméthylcellulose à 2% (référence 7HXF chez Aqualon) ;
- 2% d'une dispersion à 51% d'un caoutchouc styrène-butadiène (obtenu auprès de BASF sous la marque LD417®),

les % étant des pourcentages massiques exprimés par rapport à la masse totale de l'électrode hormis le collecteur de courant.
Les électrodes positive et négative susmentionnées d'une surface égale à 10,24 cm$^2$ (soit des dimensions de 3,2*3,2 cm) sont assemblées dans une cellule du type « Pouch Cell ».
L'électrolyte utilisé est une solution comprenant de l'acétonitrile comprenant un sel de potassium (KPF$_6$ 1M) et est utilisé selon une quantité suffisante pour imprégner l'ensemble de la cellule. Le séparateur utilisé est un séparateur en PDA25® (qui correspond à du polypropylène) (obtenu auprès de Treofan GmbH, Allemagne) de 25 $\mu$m d'épaisseur.
La cellule est étudiée par voltammétrie cyclique, les résultats étant reportés sur la figure 5.
L'aire sous le voltammogramme est particulièrement importante, ce qui atteste d'une capacité importante du supercondensateur, sachant que l'aire sous le voltammogramme est proportionnelle à la capacité du supercondensateur.

b) Test réalisé avec un dispositif conforme à l'invention avec un électrolyte à base d'un sel de sodium

Le dispositif testé dans cette partie est similaire à celui exemplifié à la partie a), si ce n'est que l'électrolyte est, dans ce cas, une solution comprenant de l'acétonitrile et un sel de sodium NaPF$_6$ (1 M).

# EP 2 989 648 B1

Le dispositif est étudié également par voltammétrie cyclique, les résultats étant reportés sur la figure 6.

Les résultats montrent une tendance similaire à celle observée avec le dispositif exemplifié à la partie a), si ce n'est que l'aire sous le voltammogramme obtenu avec le dispositif de la partie a) est plus importante que celle obtenue avec le dispositif de la partie b).

EXEMPLE 4

Cet exemple vise à démontrer l'influence de l'équilibrage des électrodes des dispositifs de l'invention sur les performances de ceux-ci (partie a) de l'exemple) et sur la stabilité de ceux-ci (partie b) de l'exemple).

a) Influence de l'équilibrage des électrodes sur les performances du dispositif

A titre liminaire, il est rappelé, au regard de la figure 7, qui illustre un voltammogramme obtenu avec un supercondensateur hybride, le comportement électrochimique classique attendu avec un tel supercondensateur.

Sur cette figure, on peut constater la présence de deux parties (respectivement, nommées partie a et partie b sur la figure), la partie a correspondant à la partie dite « supercapacitive » et la partie b correspondant à la partie dite « batterie » du dispositif.

Or, l'énergie finale du dispositif étant proportionnelle à la capacité et au carré du potentiel imposé, il peut donc être intéressant d'arriver à déplacer le fonctionnement du dispositif vers la partie « batterie » (qui permet d'accéder à une capacité maximale) vers des potentiels les plus élevés possibles.

Pour ce faire, des tests ont été effectués avec des dispositifs similaires à ceux décrits au paragraphe a) de l'exemple 3 (dont le sel de l'électrolyte est un sel de potassium $KPF_6$) comprenant des électrodes négatives présentant différents grammages (ou masses surfaciques), et plus spécifiquement avec des dispositifs suivants :

- une cellule, dite première cellule, équipée d'une électrode négative à 4 mg/cm$^3$ et d'une électrode positive à 8 mg/cm$^3$, ce qui correspond à un ratio (électrode positive/électrode négative) de 2;
- une cellule, dite deuxième cellule, équipée d'une électrode négative à 6 mg/cm$^3$ et d'une électrode positive à 8 mg/cm$^3$, ce qui correspond à un ratio (électrode positive/électrode négative) de 1,3 ;
- une cellule, dite troisième cellule, équipée d'une électrode négative à 9 mg/cm$^3$ et d'une électrode positive à 8 mg/cm$^3$, ce qui correspond à un ratio (électrode positive/électrode négative) de 0,88; et
- une cellule, dite quatrième cellule, équipée d'une électrode positive à 13 et d'une électrode positive à 8 mg/cm$^3$, ce qui correspond à un ratio (électrode positive/électrode négative) de 0,61.

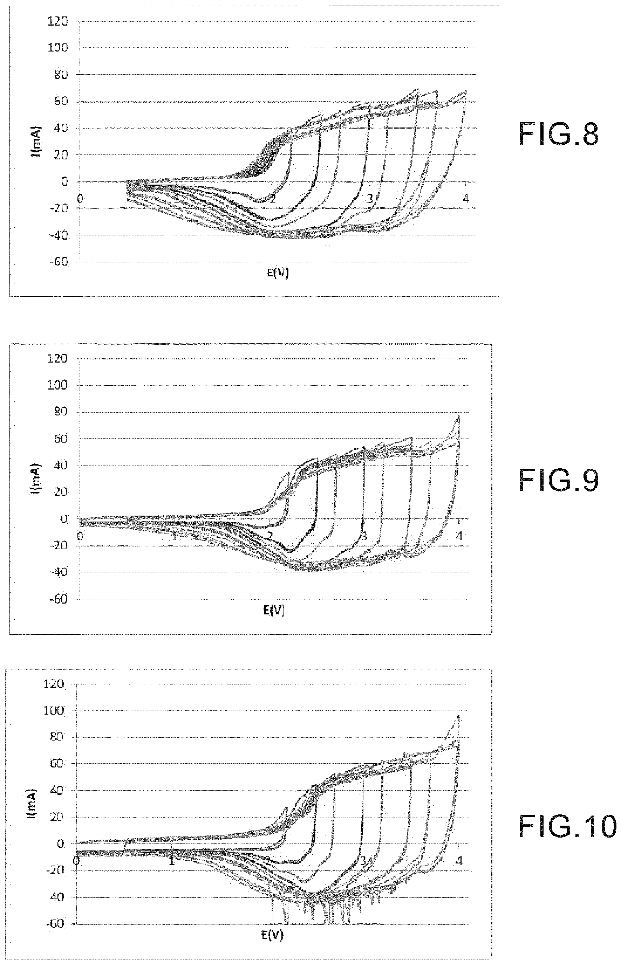

Ces différentes cellules sont soumises à des tests de voltammétrie cyclique (de 0,5→3,2 à 0,5→4V), les résultats étant respectivement reportés sur les figures 8 à 11 pour les première à quatrième cellules.

Pour la première cellule (figure 8), dès le premier cycle (de 0,5 à 2,2 V), on peut constater la présence d'un pic montrant que nous sommes déjà dans la partie « batterie ».

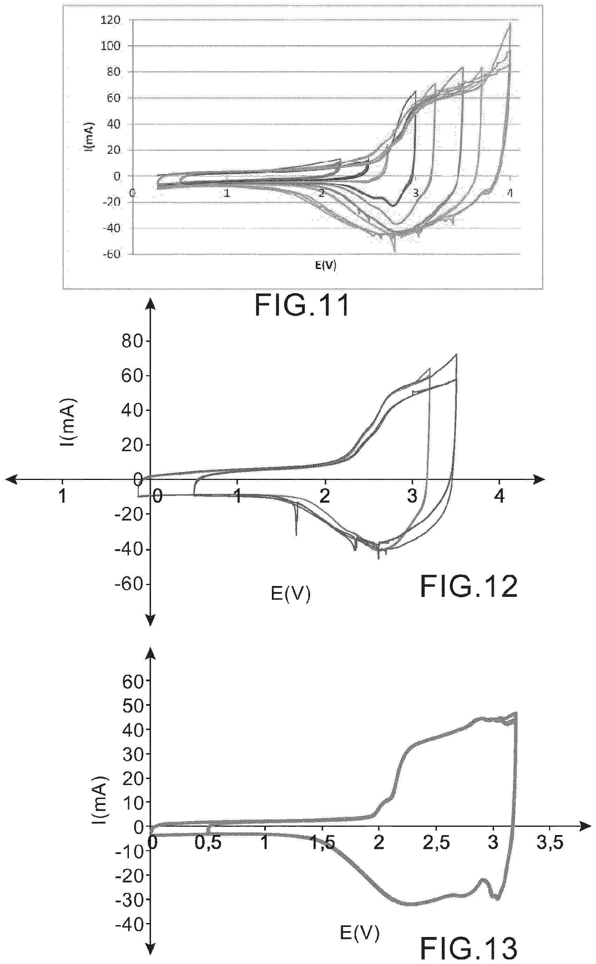

A l'inverse, pour la quatrième cellule (figure 11), le premier cycle (de 0,5 à 2,2 V) présente une forme rectangulaire spécifique à la partie « supercapacitive », la partie « batterie » n'apparaissant, quant à elle, que lors du cycle allant de 0,5 à 3V, soit un gain d'environ 1V par rapport à la première cellule.

Les deuxième et troisième cellules suivent la même tendance.

Ces tests montrent, que l'on peut facilement, avec les dispositifs conformes à l'invention, se déplacer vers la partie « batterie » grâce à un surgrammage de l'électrode négative par rapport à l'électrode positive.

b) Influence de l'équilibrage et des bornes de cyclage sur la stabilité du système

Dans cette partie, il est étudié l'influence de l'équilibrage des électrodes des dispositifs de l'invention sur la stabilité de ceux-ci.

Pour ce faire, des tests ont été effectués avec des dispositifs similaires à ceux décrits au paragraphe a) de l'exemple 3 (dont le sel de l'électrolyte est un sel de potassium $KPF_6$) comprenant des électrodes négatives présentant différents grammages (ou masses surfaciques), et plus spécifiquement avec des dispositifs suivants :

- une cellule, dite première cellule, équipée d'une électrode négative à 4 mg/cm$^3$ et d'une électrode positive à 8 mg/cm$^3$, ce qui correspond à un ratio (électrode positive/électrode négative) de 2; et
- une cellule, dite deuxième cellule, équipée d'une électrode négative à 13 mg/cm$^3$ et d'une électrode positive à 8 mg/cm$^3$, ce qui correspond à un ratio (électrode positive/électrode négative) de 0,61.

Les cellules susmentionnées ont été testées par cyclage galvanostatique de 1,5 à 3,7 V pendant 1000 cycles à 20 mA.

On constate que le fait de surgrammer a une influence sur la stabilité du dispositif (se matérialisant, notamment, par une perte de capacités au cycle 1000 par rapport au cycle 1 supérieure à 40% pour la deuxième cellule, alors qu'elle est supérieure à 60% pour la première cellule).

Afin d'améliorer encore la stabilité, il a testé le fait de diminuer la borne supérieure de fonctionnement du dispositif, en passant 3,7 V à 3,2 V.

Il a été constaté que, pour une électrode négative grammée à 13 mg/cm$^2$, si l'on cycle jusqu'à 3,2 V, il n'y a pas de perte de courant à l'issue de trois cycles (alors qu'une perte est déjà constaté lorsque l'on cycle jusqu'à 3,7 V), comme l'atteste la figure 12 illustrant un voltammogramme obtenu par cyclage entre 1,5 et 3,2 V (3 cycles) et par cyclage entre 1,5 et 3,7 V (3 cycles) avec la deuxième cellule.

En opérant un cyclage galvanostatique sur 1000 cycles entre 1,5 et 3,2 V, il a été constaté une perte de capacités inférieure à 10%, ce qui peut se révéler intéressant pour de nombreuses applications.

EXEMPLE 5

Cet exemple vise à démontrer l'aspect sécuritaire des dispositifs de l'invention en comparaison avec des systèmes de stockage à base de lithium, notamment lié aux faits suivants :

- la possibilité de décharge complète des dispositifs de l'invention (partie a) ;
- la possibilité de s'affranchir d'une couche de passivation (partie b) ;
- la possibilité de s'affranchir du surdimensionnement de l'électrode négative par rapport à l'électrode positive (partie c) ;
- la possibilité de dissoudre du potassium solide dans l'acétonitrile.

Le dispositif de l'invention testé est celui de la partie a) de l'exemple 3.

a) Possibilité de décharge complète des dispositifs de l'invention

Dans le cas d'un système de stockage à base de lithium, il n'est pas possible de décharger complètement le système, ce qui implique qu'il existe de l'énergie embarquée dans le système et donc un risque potentiel lié à la sécurité.

Dans le cas du dispositif de l'invention testé, afin de s'assurer qu'il est possible de décharger complètement le dispositif, il a été procédé à trois cycles de 0,5 à 3,2 V puis trois cycles de 0 à 3,2 V.

Comme l'atteste la figure 13, illustrant le voltammogramme du test mentionné ci-dessus, le fait de décharger le dispositif complètement, n'a aucune influence sur les performances de celui-ci, en ce sens que le dispositif présente la même capacité lors des cycles suivants.

De plus, une étude « post mortem » du dispositif, c'est-à-dire après ouverture de celui-ci et observation visuelle de ces différents éléments, a permis de constater qu'aucun des éléments n'a subi de dégradation suite à la décharge complète de celui-ci.

En conclusion, la possibilité de décharger complètement le système représente un avantage non négligeable, par exemple, dans le cas où il y a nécessité d'intervenir directement sur le dispositif.

b) Possibilité de s'affranchir d'une couche de passivation

Dans le cas d'un système à base de lithium, l'un des problèmes sécuritaires est lié à l'obligation de former une couche de passivation à l'électrode négative. La solution généralement mise en oeuvre consiste à appliquer une feuille de lithium complémentaire pour saturer le système en ions lithium, dont la majorité est consommée lors des premiers cycles. Cette mise en oeuvre pose des problèmes de sécurité et un surcoût important.

Dans le cas des dispositifs de l'invention, il n'est pas nécessaire de passer par la formation d'une couche de passivation, ce qui présente un avantage du point de vue de la sécurité.

c) Possibilité de s'affranchir du surdimensionnement de l'électrode négative par rapport à l'électrode positive

Dans le cas d'un système à base de lithium, en vue de s'affranchir du dépôt éventuel de lithium métallique à la surface de l'électrode négative, il est d'usage de surdimensionner l'électrode négative.

Dans le cas des dispositifs de l'invention, un test a été effectué en surdimensionnant l'électrode négative (35*35 mm au lieu de 32*32 mm pour l'électrode positive). Ce test n'a montré aucune différence en termes de performances, ce qui constitue encore un autre avantage des dispositifs de l'invention.

d) Possibilité de dissoudre du potassium solide dans l'acétonitrile

L'utilisation de l'acétonitrile présente un avantage certain, en ce sens qu'il permet, du fait du caractère du potassium dans celui-ci, de s'affranchir du danger lié au dépôt de potassium solide à la surface de l'électrode.

**Revendications**

1. Dispositif du type supercondensateur hybride comprenant au moins une cellule comprenant :

   - une électrode positive poreuse comprenant du carbone activé ;
   - une électrode négative comprenant un matériau carboné apte à intercaler un élément alcalin autre que le lithium, ce matériau carboné étant différent du carbone activé utilisé à l'électrode positive ; et
   - un électrolyte non aqueux comprenant un sel choisi parmi les sels de métal alcalin autre que le lithium.

2. Dispositif selon la revendication 1, dans lequel les sels de métal alcalin autre que le lithium sont choisis parmi les sels de sodium, les sels de potassium, les sels de rubidium, les sels de césium et les mélanges de ceux-ci.

3. Dispositif selon l'une quelconque des revendications précédentes, dans lequel le matériau carboné apte à intercaler un élément alcalin autre que le lithium est un matériau carboné du type graphitique.

4. Dispositif selon l'une quelconque des revendications précédentes, dans lequel l'électrode positive et l'électrode négative comprennent au moins un liant organique choisis parmi des liants polymériques.

5. Dispositif selon l'une quelconque des revendications précédentes, dans lequel l'électrode positive comprend, en outre, un additif carboné conducteur de l'électricité autre que du carbone activé, choisi parmi les noirs de carbone, les noirs d'acétylène, un graphite, les nanotubes de carbone, les fibres de carbone et les mélanges de ceux-ci, ou dans lequel l'électrode négative comprend, en outre, un additif carboné conducteur de l'électricité autre que le matériau carboné apte à intercaler défini à la revendication 1, choisi parmi les noirs de carbone, les noirs d'acétylène, du graphite, les nanotubes de carbone, les fibres de carbone et les mélanges de ceux-ci.

6. Dispositif selon l'une quelconque des revendications précédentes, dans lequel le sel de sodium est choisi parmi $NaClO_4$, $NaBF_4$, $NaPF_6$, le bis(trifluorométhanesulfonyl)imide de sodium, le bis(fluorosulfonyl)imide de sodium, le bis(oxalato)borate de sodium, NaSCN, $NaSbF_6$, $NaAsF_6$, $NaAlCl_4$, $NaSiF_6$, $NaSO_3CF_3$ et les mélanges de ceux-ci.

7. Dispositif selon l'une quelconque des revendications précédentes, dans lequel le sel de potassium est choisi parmi $KClO_4$, $KBF_4$, $KPF_6$, le bis(trifluorométhanesulfonyl)imide de potassium, le bis(fluorosulfonyl)imide de potassium, le bis(oxalato)borate de potassium, KSCN, $KSbF_6$, $KAsF_6$, $KAlCl_4$, $KSiF_6$, $KSO_3CF_3$ et les mélanges de ceux-ci.

8. Dispositif selon l'une quelconque des revendications précédentes, dans lequel le ou les sels présents dans l'électrolyte sont en solution dans au moins un solvant organique.

9. Dispositif selon la revendication 8, dans lequel le ou les solvants organiques sont choisis parmi les solvants nitriles, les solvants carbonates, les solvants lactones, les solvants sulfones, les solvants lactames, les solvants amides, les solvants cétones, les solvants nitroalcanes, les solvants amines, les solvants sulfoxydes, les solvants esters, les solvants éthers linéaires, les solvants éthers cycliques, les solvants oxazolidones et les mélanges de ceux-ci.

10. Dispositif selon la revendication 1 à 6, dans lequel, lorsque l'électrolyte comprend au moins un sel de sodium, il comprend au moins un sel de sodium choisi parmi $NaClO_4$, $NaPF_6$, $NaBF_4$ et les mélanges de ceux-ci, en solution dans au moins un solvant choisi parmi le carbonate de propylène, le carbonate d'éthylène, le diéthylcarbonate, le diméthylcarbonate, le diméthoxyéthane, l'acétonitrile, la γ-butyrolactone, le diméthylformamide et les mélanges de ceux-ci.

11. Dispositif selon la revendication 10, dans lequel, lorsque l'électrolyte comprend au moins un sel de sodium, il comprend, comme sel de sodium, du $NaClO_4$, $NaPF_6$ ou $NaBF_4$ en solution dans un solvant ou un mélange de solvants étant :

    - du carbonate de propylène seul ;

- un mélange carbonate d'éthylène/diéthylcarbonate 1 :1;
- un mélange carbonate d'éthylène/diméthylcarbonate 1 :1;
- un mélange diméthoxyéthaane/carbonate de propylène 1 :2 ;
- de l'acétonitrile seul ;
- de la $\gamma$-butyrolactone seul ; ou
- du diméthylformamide seul.

12. Dispositif selon l'une quelconque des revendications 1 à 9, dans lequel, lorsque l'électrolyte comprend au moins un sel de potassium, il comprend au moins un sel de potassium choisi parmi KClO$_4$, KPF$_6$, KBF$_4$ et les mélanges de ceux-ci, en solution dans au moins un solvant choisi parmi les solvants carbonates, les solvants éthers linéaires, les solvants nitriles, les solvants lactones, les solvants amides et les mélanges de ceux-ci.

13. Dispositif selon la revendication 12, dans lequel, lorsque l'électrolyte comprend au moins un sel de potassium, il comprend, comme sel de potassium, du KClO$_4$, KPF$_6$ ou KBF$_4$ en solution dans un solvant ou un mélange de solvants étant :

- du carbonate de propylène seul ;
- un mélange carbonate d'éthylène/diéthylcarbonate 1 :1;
- un mélange carbonate d'éthylène/diméthylcarbonate 1 :1;
- un mélange diméthoxyéthane/carbonate de propylène 1 :2 ;
- de l'acétonitrile seul ;
- de la $\gamma$-butyrolactone seul ; ou
- du diméthylformamide seul.

14. Dispositif selon l'une quelconque des revendications 8 à 13, dans lequel le solvant organique est de l'acétonitrile.

15. Dispositif selon l'une quelconque des revendications 1 à 14, dans lequel ladite électrode négative et ladite électrode positive sont associées, chacune, à un collecteur de courant conducteur de l'électricité.

16. Dispositif selon la revendication 15, dans lequel le collecteur de courant conducteur de l'électricité est en aluminium.

17. Dispositif selon la revendication 15, dans lequel, lorsque le collecteur de courant conducteur de l'électricité est en cuivre, l'électrolyte ne contient pas d'acétonitrile.

**Patentansprüche**

1. Vorrichtung vom Typ Hybrid-Superkondensator, umfassend wenigstens eine Zelle, umfassend:

- eine poröse positive Elektrode, die aktivierten Kohlenstoff enthält;
- eine negative Elektrode, die ein kohlenstoffhaltiges Material enthält, das dazu ausgelegt ist, ein Alkalielement außer Lithium zu interkalieren, wobei dieses kohlenstoffhaltige Material verschieden ist von dem aktivierten Kohlenstoff, der als positive Elektrode verwendet wird; und
- einen nicht wässrigen Elektrolyten, der ein Salz enthält, das ausgewählt ist aus den Salzen von Alkalimetall außer Lithium.

2. Vorrichtung nach Anspruch 1, wobei die Salze von Alkalimetall außer Lithium ausgewählt sind aus den Natriumsalzen, den Kaliumsalzen, den Rubidiumsalzen, den Cäsiumsalzen und deren Mischungen.

3. Vorrichtung nach einem der vorhergehenden Ansprüche, wobei das kohlenstoffhaltige Material, das dazu ausgelegt ist, ein Alkalielement außer Lithium zu interkalieren, ein kohlenstoffhaltiges Material vom Typ Graphit ist.

4. Vorrichtung nach einem der vorhergehenden Ansprüche, wobei die positive Elektrode und die negative Elektrode wenigstens einen organischen Binder enthalten, der aus den Polymerbindern ausgewählt ist.

5. Vorrichtung nach einem der vorhergehenden Ansprüche, wobei die positive Elektrode ferner ein elektrisch leitendes kohlenstoffhaltiges Additiv außer aktiviertem Kohlenstoff enthält, das ausgewählt ist aus den Kohlenstoffschwarzen, den Acetylenschwarzen, einem Graphit, den Kohlenstoff-Nanoröhrchen, den Kohlenstofffasern und deren Mischungen, oder wobei die negative Elektrode ferner ein elektrisch leitendes kohlenstoffhaltiges Additiv außer dem in Anspruch 1 definierten interkalationsfähigen kohlenstoffhaltigen Material enthält, das ausgewählt ist aus den Kohlenstoffschwarzen, den Acetylenschwarzen, Graphit, den Kohlenstoff-Nanoröhrchen, den Kohlenstofffasern und deren Mischungen.

6. Vorrichtung nach einem der vorhergehenden Ansprüche, wobei das Natriumsalz ausgewählt ist aus $NaClO_4$, $NaBF_4$, $NaPF_6$, Bis(trifluormethansulfonyl)imid von Natrium, Bis(fluorsulfonyl)imid von Natrium, Bis(oxalat)borat von Natrium, NaSCN, $NaSbF_6$, $NaAsF_6$, $NaAlCl_4$, $NaSiF_6$, $NaSO_3CF_3$ und deren Mischungen.

7. Vorrichtung nach einem der vorhergehenden Ansprüche, wobei das Kaliumsalz ausgewählt ist aus $KClO_4$, $KBF_4$, $KPF_6$, Bis(trifluormethansulfonyl)imid von Kalium, Bis(fluorsulfonyl)imid von Kalium, Bis(oxalat)borat von Kalium, KSCN, $KSbF_6$, $KAsF_6$, $KAlCl_4$, $KSiF_6$, $KSO_3CF_3$ und deren Mischungen.

8. Vorrichtung nach einem der vorhergehenden Ansprüche, wobei das Salz oder die Salze, die in dem Elektrolyten enthalten sind, in Lösung in wenigstens einem organischen Lösungsmittel sind.

9. Vorrichtung nach Anspruch 8, wobei das oder die organische(n) Lösungsmittel ausgewählt sind aus den Nitril-Lösungsmitteln, den Karbonat-Lösungsmitteln, den Lacton-Lösungsmitteln, den Sulfon-Lösungsmitteln, den Lactam-Lösungsmitteln, den Amid-Lösungsmitteln, den Ceton-Lösungsmitteln, den Nitroalcan-Lösungsmitteln, den Amin-Lösungsmittel, den Sulfoxid-Lösungsmitteln, den Esther-Lösungsmittel, den linearen Ether-Lösungsmitteln, den zyklischen Ether-Lösungsmitteln, den Oxazolidon-Lösungsmitteln und deren Mischungen.

10. Vorrichtung nach Anspruch 1 bis 6, wobei, wenn der Elektrolyt wenigstens ein Natriumsalz enthält, er wenigstens ein Natriumsalz enthält, das ausgewählt ist aus $NaClO_4$, $NaPF_6$, $NaBF_4$ und deren Mischungen, in Lösung in wenigstens einem Lösungsmittel, das ausgewählt ist aus Propylen-Karbonat, Ethylen-Karbonat, Diethylkarbonat, Dimethylkarbonat, Dimethoxyethan, Acetonitril, $\gamma$-Buthyrolacton, Dimethylformamid und deren Mischungen.

11. Vorrichtung nach Anspruch 10, wobei, wenn der Elektrolyt wenigstens ein Natriumsalz enthält, er als Natriumsalz $NaClO_4$, $NaPF_6$ oder $NaBF_4$ in Lösung in einem Lösungsmittel oder einer Mischung von Lösungsmitteln wie folgt enthält:

   - nur Propylen-Karbonat;
   - eine 1:1-Mischung Ethylen-Karbonat/Diethylkarbonat;
   - eine 1:1-Mischung Ethylen-Karbonat/Dimethylkarbonat;
   - eine 1:2-Mischung Dimethoxyethan/Propylen-Karbonat,
   - nur Acetonitril;
   - nur $\gamma$-Buthyrolacton; oder
   - nur Dimethylformamid.

12. Vorrichtung nach einem der Ansprüche 1 bis 9, wobei, wenn der Elektrolyt wenigstens ein Kaliumsalz enthält, er wenigstens ein Kaliumsalz enthält ausgewählt aus $KClO_4$, $KPF_6$, $KBF_4$ und deren Mischungen in Lösung in wenigstens einem Lösungsmittel, das ausgewählt ist aus den Karbonat-Lösungsmitteln, den linearen Ether-Lösungsmitteln, den Nitril-Lösungsmitteln, den Lacton-Lösungsmitteln, den Amid-Lösungsmitteln und deren Mischungen.

13. Vorrichtung nach Anspruch 12, wobei, wenn der Elektrolyt wenigstens ein Kaliumsalz enthält, er als Kaliumsalz $KClO_4$, $KPF_6$ oder $KBF_4$ in Lösung in einem Lösungsmittel oder einer Mischung von Lösungsmitteln wie folgt enthält:

   - nur Propylen-Karbonat;
   - eine 1:1-Mischung Ethylen-Karbonat/Diethylkarbonat;
   - eine 1:1-Mischung Ethylen-Karbonat/Dimethylkarbonat;
   - eine 1:2-Mischung Dimethoxyethan/Propylen-Karbonat,
   - nur Acetonitril;
   - nur $\gamma$-Buthyrolacton; oder
   - nur Dimethylformamid.

14. Vorrichtung nach einem der Ansprüche 8 bis 13, wobei das organische Lösungsmittel Acetonitril ist.

15. Vorrichtung nach einem der Ansprüche 1 bis 14, wobei die negative Elektrode und die positive Elektrode jeweils einem elektrisch leitfähigen Stromkollektor zugeordnet sind.

**16.** Vorrichtung nach Anspruch 15, wobei der elektrisch leitfähige Stromkollektor aus Aluminium ist.

**17.** Vorrichtung nach Anspruch 17, wobei, wenn der elektrisch leitfähige Stromkollektor aus Kupfer ist, der Elektrolyt kein Acetonitril enthält.

## Claims

**1.** A device of the hybrid supercapacitor type comprising at least one cell comprising:

- a porous positive electrode comprising activated carbon;
- a negative electrode comprising a carbonaceous material capable of inserting an alkaline element other than lithium, this carbonaceous material being different from the activated carbon used at the positive electrode; and
- a non-aqueous electrolyte comprising a salt selected from among salts of an alkaline metal other than lithium.

**2.** The device according to claim 1, wherein the salts of alkaline metal other than lithium are selected from among sodium salts, potassium salts, rubidium salts, cesium salts and mixtures thereof.

**3.** The device according to any of the preceding claims, wherein the carbonaceous material capable of inserting an alkaline element other than lithium is a carbonaceous material of the graphite type.

**4.** The device according to any of the preceding claims, wherein the positive electrode and the negative electrode comprise at least one organic binder selected from among polymeric binders.

**5.** The device according to any of the preceding claims, wherein the positive electrode further comprises an electrically conductive carbonaceous additive other than activated carbon, selected from among carbon blacks, acetylene blacks, graphite, carbon nanotubes, carbon fibers and mixtures thereof or wherein the negative electrode further comprises an electrically conductive carbonaceous additive other than activated carbon, capable of inserting as defined in claim 1, selected from among carbon blacks, acetylene blacks, graphite, carbon nanotubes, carbon fibers and mixtures thereof.

**6.** The device according to any of the preceding claims, wherein the sodium salt is selected from among $NaClO_4$, $NaBF_4$, $NaPF_6$, sodium bis(trifluoromethanesulfonyl)imide, sodium bis(fluorosulfonyl)imide, sodium bis(oxalato)borate, NaSCN, $NaSbF_6$, $NaAsF_6$, $NaAlCl_4$, $NaSiF_6$, $NaSO_3CF_3$ and mixtures thereof.

**7.** The device according to any of the preceding claims, wherein the potassium salt is selected from among $KClO_4$, $KBF_4$, $KPF_6$, potassium bis(trifluoromethanesulfonyl)imide, potassium bis(fluorosulfonyl)imide, potassium bis(oxalato)borate, KSCN, $KSbF_6$, $KAsF_6$, $KAlCl_4$, $KSiF_6$, $KSO_3CF_3$ and mixtures thereof.

**8.** The device according to any of the preceding claims, wherein the salt(s) present in the electrolyte is(are) in solution in at least one organic solvent.

**9.** The device according to claim 8, wherein the organic solvent(s) is(are) selected from among nitrile solvents, carbonate solvents, lactones solvents, sulfone solvents, lactam solvents, amide solvents, ketone solvents, nitroalkane solvents, amine solvents, sulfoxide solvents, ester solvents, linear ether solvents, cyclic ether solvents, oxazolidone solvents and mixtures thereof.

**10.** The device according to claims 1 to 6, wherein, when the electrolyte comprises at least one sodium salt, it comprises at least one sodium salt selected from among $NaClO_4$, $NaPF_6$, $NaBF_4$ and mixtures thereof, in solution in at least one solvent selected from among propylene carbonate, ethylene carbonate, diethyl carbonate, dimethyl carbonate, dimethoxyethane, acetonitrile, $\gamma$-butyrolactone, dimethylformamide and mixtures thereof.

**11.** The device according to claim 10, wherein, when the electrolyte comprises at least one sodium salt, it comprises, as a sodium salt, $NaClO_4$, $NaPF_6$ or $NaBF_4$ in solution in a solvent or a mixture of solvents being:

- propylene carbonate alone;

- a ethylene carbonate/diethyl carbonate (1:1) mixture;
- a ethylene carbonate/dimethyl carbonate (1:1) mixture;
- a dimethoxyéthane/propylene carbonate (1:2) mixture;
- acetonitrile alone;
- $\gamma$-butyrolactone alone; or
- dimethylformamide alone.

12. The device according to any of claims 1 to 9, wherein, when the electrolyte comprises at least one potassium salt, it comprises at least one potassium salt selected from among $KClO_4$, $KPF_6$, $KBF_4$ and mixtures thereof, in solution in at least one solvent selected from among carbonate solvents, linear ether solvents, nitrile solvents, lactone solvents, amide solvents and mixtures thereof.

13. The device according to claim 12, wherein, when the electrolyte comprises at least one potassium salt, it comprises, as a potassium salt, $KClO_4$, $KPF_6$ or $KBF_4$ in solution in a solvent or a mixture of solvents being:

- propylene carbonate alone;
- a ethylene carbonate/diethyl carbonate (1:1) mixture;
- a ethylene carbonate/dimethyl carbonate (1:1) mixture;
- a dimethoxyéthane/propylene carbonate (1:2) mixture;
- acetonitrile alone;
- $\gamma$-butyrolactone alone; or
- dimethylformamide alone.

14. The device according to any of claims 8 to 13, wherein the organic solvent is acetonitrile.

15. The device according to any of claims 1 to 14, wherein said negative electrode and said positive electrode are each associated with an electrically conductive current collector.

16. The device according to claim 15, wherein the electrically conductive current collector is in aluminium.

17. The device according to claim 15, wherein, when the electrically conductive current collector is in copper, the electrolyte does not contain any acetonitrile.

FIG.1

FIG.2

FIG.3

FIG.4

FIG.5

FIG.6

FIG.7

FIG.8

FIG.9

FIG.10

FIG.11

FIG.12

FIG.13

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2759211 A
- US 20070053141 A
- US 2006209493 A
- JP 2008050258 A
- WO 9521466 A
- WO 0002215 A
- WO 2012115050 A
- US 2009290287 A
- WO 2010024327 A